# EUROPÄISCHE PATENTSCHRIFT

(11) **EP 0 654 980 B1**
(45) Veröffentlichungstag und Bekanntmachung des Hinweises auf die Patenterteilung: **09.09.1998**
(21) Anmeldenummer: 93914602.3
(22) Anmeldetag: 03.07.1993
(51) Int. Cl.: A61C 17/16, A61C 15/00

(54) **REINIGUNGSWERKZEUG UND ELEKTRISCH BETRIEBENES ZAHNREINIGUNGSGERÄT**
CLEANING TOOL AND ELECTRICALLY DRIVEN TOOTH-CLEANING INSTRUMENT USING SUCH A TOOL
INSTRUMENT DE NETTOYAGE ET APPAREIL DE DETARTRAGE DENTAIRE ELECTRIQUE

(30) Priorität: 12.08.1992 DE 4226659; 20.03.1993 DE 4309078
(43) Veröffentlichungstag der Anmeldung: 31.05.1995
(73) Patentinhaber: Braun Aktiengesellschaft, Frankfurt am Main (DE)
(72) Erfinder: HACZEK, Werner, D-90478 Nürnberg (DE); BOLAND, Bernhard, D-60385 Frankfurt (DE); HILFINGER, Peter, D-61350 Bad Homburg (DE); SCHWARZ-HARTMANN, Armin, D-55234 Albig (DE)
(86) Internationale Anmeldenummer: DE9300596
(87) Internationale Veröffentlichungsnummer: WO9404093

(56) Entgegenhaltungen:
- EP-A- 0 028 530
- DD-A- 258 566
- DE-C- 4 005 625
- US-A- 3 091 033
- US-A- 3 472 045
- US-A- 3 552 022

## Beschreibung

Die Erfindung betrifft ein elektrisch betriebenes Zahnreinigungsgerät mit einer in einem Griffteil untergebrachten Antriebswelle, wobei ein Reinigungswerkzeug mit der Antriebswelle koppelbar und in Drehung versetzbar ist sowie ein Reinigungswerkzeug zum Aufstecken auf ein Zahnreinigungsgerät.

Ein derartiges Zahnreinigungsgerät ist beispielsweise aus der US 3 091 033 A bekannt. Dieses Zahnreinigungsgerät weist ein in Drehung versetzbares Reinigungswerkzeug auf, welches mit einer Drehzahl von etwa 2000 Umdrehungen pro Sekunde rotiert. Das Reinigungswerkzeug selbst besteht aus Stahl, verjüngt sich konisch von einem Mittelabschnitt hin zu einer Spitze und besitzt mehrere Kanten, die jedoch nicht als Schneidkanten ausgebildet sein sollen. Bei der Rotation des Reinigungswerkzeuges bewirken diese gegen den Zahn stoßenden Kanten eine Vibration im Bereich einer Frequenz von etwa 12 kHz. Hierdurch soll Zahnstein von den Zähnen entfernt werden.

Aus der DD 258 566 A1 ist ein Interdentalraum-Polierer bekannt, mit dem die Politur der schwer zugänglichen Zahnzwischenräume durchgeführt werden kann. Das Werkzeug weist einen kegelförmigen, im Querschnitt vierkantigen Kunststoffkörper auf, der durch ein Zwischenstück an ein herkömmliches zahnärztliches Winkelstück angeschlossen werden kann. Durch eine Steckverbindung wird die Rotation des Winkelstückfutters auf das Werkzeug übertragen. Die Polierwirkung wird durch Kantenabtrieb des Kunststoffes erreicht. Der Polierkörper ist als Einwegwerkstück ausgebildet und besteht aus Niederdruckpolyäthylen.

Ein weiteres Zahnreinigungsgerät und ein Reinigungswerkzeug sind aus der DE-PS 1 011 116 bekannt. Danach ist ein Pinsel auf einer Welle montiert, die mit einem Antriebsaggregat gekoppelt ist. Der Pinsel besteht aus einer Vielzahl von einzelnen Pinselhaaren, deren Länge derart bemessen ist, daß der Pinsel gegen sein freies Ende spitz ausläuft. Mit Hilfe des Antriebsaggregats kann der Pinsel in eine Rotation um seine Längsachse versetzt und dann zur Zahnreinigung verwendet werden. Aufgrund der größeren Abmessungen des Pinsels ist das Werkzeug jedoch nicht zur Reinigung von Zahnzwischenräumen geeignet.

Aus der DE-OS 1 766 651 ist eine Vorrichtung bekannt, die von Zahnärzten beispielsweise zum Abschleifen von Amalgamfüllungen verwendet werden kann. Zum Bearbeiten der Zähne weist die Vorrichtung ein messerähnliches Werkzeug auf, das von einem Antriebsaggregat in eine Hubbewegung versetzt werden kann. Zur Erhöhung der Schleifwirkung kann das Werkzeug mit zusätzlichen Partikeln, beispielsweise mit Schleifpulver beschichtet werden. Aufgrund der Breite bzw. der Dicke des Werkzeugs von mehreren Millimetern ist diese Vorrichtung nicht zur Reinigung von Zahnzwischenräumen geeignet.

Der Erfindung liegt die Aufgabe zugrunde, ein Zahnreinigungsgerät sowie ein Reinigungswerkzeug für ein Zahnreinigungsgerät zu schaffen, mit dem eine effektive Reinigung, insbesondere der Zahnzwischenräume ermöglicht ist, wobei das Zahnreinigungsgerät bzw. Reinigungswerkzeug einfach und sicher von dem Benutzer handhabbar ist.

Diese Aufgabe wird bei dem Zahnreinigungsgerät nach der Erfindung im wesentlichen dadurch gelöst, daß das Reinigungswerkzeug verschiebbar und drehbar in einem Aufsatzteil untergebracht und das Aufsatzteil auf das Griffteil steckbar ist.

Durch die verschiebbare Unterbringung des Reinigungswerkzeuges in dem Aufsatzteil wird die Möglichkeit geschaffen, daß das Zahnreinigungsgerät an die jeweilige momentane Verwendung optimal angepaßt werden kann. So kann das Reinigungswerkzeug aus dem Aufsatzteil herausgeschoben werden, wenn ein Benutzer das Zahnreinigungsgerät zum Reinigen der Zahnzwischenräume benutzen will. Ist das Zahnreinigungsgerät hingegen nicht in Benutzung, so kann das Reinigungswerkzeug in das Aufsatzteil hineingeschoben werden, wodurch eine Verschmutzung oder eine Beschädigung des Reinigungswerkzeuges ausgeschlossen ist. Damit wird erreicht daß das Reinigungswerkzeug auch aus hygienischer Sicht den Anforderungen genügt und länger brauchbar bleibt. Soll das Reinigungswerkzeug zum Beispiel auf Reisen verpackt werden, so ist gewährleistet, daß das Reinigungswerkzeug nicht sofort durch andere Gegenstände verschmutzt oder beschädigt wird oder umgekehrt diese Gegenstände durch das Reinigungswerkzeug verschmutzt oder beschädigt werden. Ist das Reinigungswerkzeug nach längerem Gebrauch abgenutzt, so kann das Aufsatzteil mit dem darin untergebrachten Reinigungswerkzeug von dem Griffteil abgezogen und gegen ein neues Aufsatzteil mit einem neuen Reinigungswerkzeug ausgetauscht werden. Der Benutzer kommt dabei mit dem Reinigungswerkzeug selbst bei dessen Austausch nicht in Kontakt, sondern kann dasselbe zusammen mit dem Aufsatzteil in einfacher Weise auswechseln. Jedoch kann auch vorgesehen werden, das Aufsatzteil getrennt von dem Reinigungswerkzeug auf das Griffteil zu stecken, so daß nur das Reinigungswerkzeug selbst nach Benutzung bzw. Verbrauch auszutauschen ist.

Nach einer Ausgestaltung der Erfindung ist das Aufatzteil auf der dem Griffteil abgewandten Seite mit einer Führungsröhre versehen, in der das dem Griffteil abgewandte freie Ende des Reinigungswerkzeuges geführt ist. Ist das Reinigungswerkzeug aus dem Aufsatzteil herausgeschoben, so wird das Reinigungswerkzeug durch die Führungsröhre in seiner Position festgelegt. Ein Verrutschen oder eine anderweitige Veränderung der Lage des Reinigungswerkzeuges während der Benutzung wird somit sicher vermieden.

Dabei ist es vorteilhaft, wenn die Führungsröhre an ihrem dem Griffteil abgewandten freien Ende mit einer etwa halbkugelförmigen Verrundung versehen ist, vorzugsweise mit einem Durchmesser im Bereich von etwa 1 mm bis etwa 4 mm, insbesondere mit einem Wert von etwa 2,5 mm. Mit Hilfe dieser Verrundung am freien Ende der Führungsröhre kann der Benutzer die Zahnzwischenräume einfach ertasten, wobei die Verrundung bei Anlage an die Zähne leicht in den im Bereich der Zahnzwischenräume vorhandenen Vertiefungen zentrierbar ist. Hat der Benutzer auf diese Weise die Führungsröhre im Bereich eines Zahnzwischenraums positioniert, so kann er das Reinigungswerkzeug nunmehr aus dem Aufsatzteil herausschieben und in den Zahnzwischenraum einführen. Von Vorteil erstreckt sich die Führungsröhre mit dem anderen Ende bis an die kegelförmige Fläche des Griffteils, so daß sämtliche mit dem Mundraum in Berührung kommenden Teile gegebenenfalls austauschbar sind, z. B. wenn das Gerät von mehreren Benutzern verwendet werden soll.

Nach einer weiteren Ausgestaltung der Erfindung weist die Führungsröhre eine Biegung auf, wobei der Biegewinkel einen Wert im Bereich von etwa 30 Grad bis etwa 150 Grad aufweist, insbesondere einen Wert von etwa 90 Grad. Auf diese Weise wird dem Benutzer die Handhabung des Zahnreinigungsgerätes bei dem Ertasten und Einführen des Reinigungswerkzeuges in die Zahnzwischenräume sowie bei der nachfolgenden Reinigung erleichtert.

Nach einer Weiterbildung der Erfindung ist das Aufatzteil mit Mitteln versehen zum lösbaren Festlegen des Reinigungswerkzeuges in einer Transportstellung, in der sich das Reinigungswerkzeug vollständig innerhalb des Aufsatzteiles befindet. In dieser Transportstellung kann das Aufsatzteil mit dem darin untergebrachten Reinigungswerkzeug unabhängig von dem Griffteil transportiert und beispielsweise zum Verkauf angeboten werden. Durch die Festlegung des Reinigungswerkzeuges in der Transportstellung wird verhindert, daß das Reinigungswerkzeug innerhalb des Aufsatzteiles versehentlich verrutschen und beschädigt werden kann.

Dabei ist es vorteilhaft, wenn das Aufsatzteil ein hülsenförmiges Teil aufweist, das mit einer nach innen abstehenden Ringleiste versehen ist, und das Reinigungswerkzeug auf seiner dem Griffteil zugewandten Seite mit einem scheibenförmigen Sockel versehen ist, der eine der Ringleiste zugeordnete Ringnut aufweist, in der die Ringleiste für die Transportstellung einrastbar ist. Mit Hilfe der Ringleiste und der Ringnut wird mit geringem konstruktiven Aufwand ein sicheres Festlegen desReinigungswerkzeuges in der Transportstellung erreicht.

Nach einer äußerst vorteilhaften, eigenständigen Weiterbildung der Erfindung, ist das Reinigungswerkzeug auf seiner dem Griffteil zugewandten Seite mit Mitteln zur lösbaren drehfesten Kopplung mit einer Antriebswelle versehen, die von einem in dem Griffteil untergebrachten Motor antreibbar ist. Das Reinigungswerkzeug kann auf diese Weise in eine Rotation um seine Längsachse versetzt werden. Das Reinigungswerkzeug ist jedoch durch die drehfeste Kopplung nicht untrennbar mit der Antriebswelle verbunden, sondern kann von der Antriebswelle abgezogen werden. Das Aufsatzteil mit dem darin untergebrachten Reinigungswerkzeug ist somit im aufgesteckten Zustand ohne weitere Maßnahmen voll funktionsfähig und kann von dem Griffteil abgezogen und beispielsweise insgesamt ausgetauscht werden.

Dabei ist es vorteilhaft, wenn das Reinigungswerkzeug und die Antriebswelle mit einem Zapfen und einer zugeordneten Bohrung versehen sind, die zusammengefügt einen Preßsitz bilden oder die einander zugeordnete, komplementäre Querschnittsformen aufweisen. Mit diesen einfachen konstruktiven Maßnahmen wird die drehfeste Kopplung des Reinigungswerkzeuges und der Antriebswelle erreicht.

Nach einer vorteilhaften Ausgestaltung der Erfindung ist vorgesehen, daß die Antriebswelle mit einem in Längsrichtung verschiebbaren Schalter zum Ein- und Ausschalten des Motors derart gekoppelt ist, daß ein Verschieben desSchalters auch ein Verschieben der Antriebswelle in Längsrichtung bewirkt, die Rotation der Antriebswelle jedoch unabhängig ist von der Stellung des Schalters. Wird der Schalter somit vom Benutzer von der Ausschaltstellung in die Einschaltstellung verschoben, so wird dadurch gleichzeitig die Antriebswelle in Längsrichtung verschoben. Durch die Kopplung des Reinigungswerkzeuges mit der Antriebswelle wird auch das Reinigungswerkzeug in Längsrichtung verschoben. Das Reinigungswerkzeug wird auf diese Weise durch die Betätigung des Schalters aus dem Aufsatzteil herausgeschoben. Gleichzeitig mit dem Herausschieben des Reinigungswerkzeuges aus dem Aufsatzteil wird durch den Schalter auch der Motor eingeschaltet, so daß das Reinigungswerkzeug über die drehfeste Kopplung mit der Antriebswelle in eine Rotation um seine Längsachse versetzt wird. In dem eingeschalteten Zustand des Zahnreinigungsgerätes kann der Benutzer mit dem herausgeschobenen und rotierenden Reinigungswerkzeug die Zahnzwischenräume reinigen. Das mit dem Herausschieben des Reinigungswerkzeuges aus dem Aufsatzteil einhergehende Einschalten des Motors hat den Vorteil, daß der Benutzer das Reinigungswerkzeug leichter in die zu reinigenden Zahnzwischenräume einführen kann. Dieses Einführen wird aufgrund der durch das rotierende Reinigungswerkzeug entstehenden Einfädelwirkung noch weiter unterstützt. Wenn der Benutzer den Schalter wieder in die Ausschaltstellung zurückstellt, bewirkt dies, daß das Reinigungswerkzeug wieder in das Aufsatzteil zurückgeschoben und die Rotation des Reinigungswerkzeuges ausgeschaltet wird.

Sehr vorteilhaft erweist sich die Maßnahme, daß der Schalter zum Einschalten des Motors gegen eine Feder verschiebbar ist. Dies hat zur Folge, daß die Feder das eingeschaltete Zahnreinigungsgerät immer dann selbsttätig in den ausgeschalteten Zustand überführt, wenn der Benutzer aus irgendwelchen Gründen den Schalter losläßt. Dies kann beispielsweise dann erfolgen, wenn das Reinigungswerkzeug durch eine unsachgemäße Handhabung desBenutzers Schmerzen verursacht. Die Feder bewirkt sofort ein Ausschalten des Motors und gleichzeitig ein Zurückschieben des Reinigungswerkzeuges in das Aufsatzteil. Der Benutzer wird auf diese Weise vor eventuell auftretenden Schmerzen oder möglichen Verletzungen durch eine unsachgemäße Handhabung des Reinigungswerkzeugs geschützt. Ebenfalls wird durch die Feder erreicht, daß das Reinigungswerkzeug nur während der eigentlichen Reinigungsphase sich außerhalb des Aufsatzteiles befindet, ansonsten jedoch immer geschützt innerhalb des Aufsatzteiles untergebracht ist.

Dabei ist es aus konstruktiver Sicht vorteilhaft, wenn in der Ausschaltstellung des Schalters die Antriebswelle in einer hinsichtlich des Aufsatzteiles zurückgezogenen Ruhestellung angeordnet ist, in der das mit der Antriebswelle verbundene Reinigungswerkzeug sich innerhalb desAufsatzteiles befindet. In einer Einschaltstellung des Schalters hingegen ist es zweckmäßig, wenn die Antriebswelle in einer hinsichtlich des Aufsatzteiles vorgeschobenen Arbeitsstellung angeordnet ist, in der das mit der Antriebswelle verbundene Reinigungswerkzeug sich zumindest teilweise außerhalb des Aufsatzteiles befindet.

Im Zusammenhang mit der Arbeitsstellung hat es sich als besonders vorteilhaft herausgestellt, wenn das Reinigungswerkzeug sich mit einer Länge im Bereich von etwa 8 mm bis etwa 20 mm außerhalb des Aufsatzteiles befindet, insbesondere mit einer Länge von etwa 12 mm. Ist das Reinigungswerkzeug etwa um eine derartige Länge aus dem Aufatzteil herausgeschoben, so ist eine optimale Reinigung der Zahnzwischenräume möglich.

Nach einer weiteren vorteilhaften Ausgestaltung der Erfindung ist der fest in dem Griffteil untergebrachte Motor mit einer Motorwelle mit in Längsrichtung sich erstreckenden Flügeln und die Antriebswelle an ihrem dem Motor zugewandten Ende mit einer topfartigen Aufnahme mit Längsstegen im Inneren versehen, wobei die Flügel der Motorwelle zwischen die Längsstege der topfartigen Aufnahme in Längsrichtung überlaßßend ineinander eingreifen. Dadurch ist die drehfeste Verbindung der Motorwelle und der Antriebswelle unabhängig von der relativen Stellung der Antriebswelle in bezug auf die Längsrichtung. Mit Hilfe der Flügel und der Längsstege wird also die Rotation des Motors von der Motorwelle auf die Antriebswelle übertragen. Wird die Antriebswelle über den Schalter in Längsrichtung verschoben, so gewährleistet die Überlappung der Flügel und der Längsstege in Längsrichtung, daß die Flügel und die Längsstege auch weiterhin ineinander eingreifen und damit eine Übertragung der Rotation von der Motorwelle auf die Antriebswelle in jedem Fall erhalten bleibt. Die Stellung des Schalters und damit die Stellung der Antriebswelle in Längsrichtung hat somit keinen Einfluß auf die drehfeste Kopplung der Motorwelle und der Antriebswelle.

Nach einer äußerst vorteilhaften, eigenständigen Weiterbildung der Erfindung, ist das Aufatzteil auf der dem Griffteil zugewandten Seite mit Mitteln versehen zum lösbaren Festlegen des Aufsatzteiles auf dem Griffteil. Das auf das Griffteil aufgesteckte Aufsatzteil wird auf diese Weise sicher gehalten. Will der Benutzer das Aufsatzteil vom Griffteil abziehen, zum Beispiel für einen Austausch bei abgenutztem Reinigungswerkzeug, so ist dies trotzdem ohne weiteres und in einfacher Weise möglich.

Nach einer Ausgestaltung der Erfindung weisen das Griffteil und das Aufsatzteil wenigstens eine abstehende Nase und eine zugeordnete Ausnehmung auf, die bei aufgestecktem Aufsatzteil ineinander eingreifen. Zweckmäßig ist es, wenn die Nase an dem Griffteil angeordnet ist und die Ausnehmung an der Innenseite des Aufsatzteiles. Es ist jedoch auch möglich, die Nase am Aufsatzteil und die Ausnehmung am Griffteil anzuordnen. Mit Hilfe der Nase und der Ausnehmung wird mit geringem konstruktivem Aufwand ein sicheres Festlegen des Aufsatzteiles auf dem Griffteil erreicht. Durch entsprechende Abflachungen der Nase insbesondere in Einstec- und Ausziehrichtung des Aufsatzteiles wird das Einstecken und Herausziehen desselben für den Benutzer weiter erleichtert.

Vorteilhaft ist es, wenn der Nase eine das Aufatzteil durchbrechende Öffnung zugeordnet ist. Mit Hilfe dieser Öffnung kann der Benutzer in einfacher Weise kontrollieren, wann die Nase in der Öffnung richtig eingerastet und damit das Aufatzteil vollständig auf das Griffteil aufgesteckt ist.

Nach einer Weiterbildung der Erfindung ist das Aufatzteil auf der dem Griffteil zugewandten Seite mit Mitteln versehen zum eindeutigen Zuordnen des Aufsatzteiles auf dem Griffteil in Umfangsrichtung. Das auf das Griffteil aufgesteckte Aufsatzteil wird auf diese Weise eindeutig in einer bestimmten Stellung in Umfangsrichtung fesgelegt. Ebenfalls wird verhindert, daß das Aufsatzteil sich auf dem Griffteil in Umfangsrichtung drehen kann. Die Bedienung und Handhabung des Zahnreinigungsgerätes wird dadurch für den Benutzer weiter vereinfacht und verbesssert.

Nach einer vorteilhaften Ausgestaltung der Erfindung weisen das Griffteil und das Aufatzteil wenigstens eine Längsleiste und eine zugeordnete Längsnut auf, die bei aufgestecktem Aufatzteil ineinandergreifen. Dabei ist es zweckmäßig, wenn das Griffteil mit der Längsleiste und das Aufsatzteil mit der Längsnut versehen ist. Es ist jedoch auch der umgekehrte Fall möglich. Mit Hilfe der Längsleiste und der Längsnut wird mit einfachen konstruktiven Mitteln eine eindeutige Festlegung des Aufsatzteiles auf dem Griffteil in Umfangsrichtung erreicht.

Dabei ist es weiter vorteilhaft, wenn auf beiden Seiten der Nase bzw. Ausnehmung jeweils eine Längsleiste bzw. Längsnut vorgesehen ist. Durch die Anordnung zweier Längsleisten und Längsnuten wird das Einführen des Aufsatzteiles auf das Griffteil für den Benutzer weiter vereinfacht. Ebenfalls hat die symmetrische Anordnung der Längsleisten und Längsnuten den weiteren Vorteil eines optisch ausgeglichenen Aussehens des Zahnreinigungsgerätes.

Nach einer weiteren Ausgestaltung der Erfindung sind drei Nasen bzw. Ausnehmungen mit zugeordneten Längsleisten bzw. Längsnuten vorgesehen, die in teilweise ungleichen Abständen auf dem Umfang des Griffteiles bzw. Aufsatzteiles angeordnet sind. Diese Anordnung bewirkt, daß aufgrund des optischen Eindruckes es dem Benutzer leichter fällt, das Aufsatzteil ohne weitere Überlegungen richtig auf das Griffteil aufzustecken. Die Festlegung des Aufsatzteiles auf dem Griffteil wird also durch die ungleichmäßige Anordnung optisch zum Ausdruck gebracht.

Eine andere besonders vorteilhafte Ausgestaltung des Zahnreinigungsgerätes besteht auch darin, daß das Reinigungswerkzeug als einstückiges Bauteil ausgebildet ist, einen Reinigungsschaft aufweist und von einem Motor des Zahnreinigungsgerätes in Drehung versetzbar ist, der Reinigungsschaft flexibel ist und aus Polyesterelastomer oder einem hinsichtlich der Biegefestigkeit gleichartigen Werkstoff, insbesondere Hytrel (eingetragenes Warenzeichen) besteht. Diese Ausgestaltung hat den Vorteil, daß aufgrund der besonderen Eigenschaften dieses Materials der Schaft des Reinigungswerkzeuges, insbesondere auch während der Benutzung bis zu 180° umgebogen werden kann, ohne daß der Schaft bricht. Zum einen wird somit eine mögliche Verletzungsgefahr durch Abbrechen des Schaftes praktisch ausgeschlossen und zum anderen können die Zähne auch im gingivalen Bereich selbst mit einem um 180° umgebogenen Schaft gereinigt werden. In diesem Fall wird die Reinigungswirkung hauptsächlich durch den Knickstellenbereich des umgebogenen Schaftes herbeigeführt. Durch die Verwendung dieses Werkstoffes für das Reinigungswerkzeug wird die Handhabung selbst für den ungeübten Benutzer sowie auch die Reinigungswirkung verbessert.

Bei einer Ausgestaltung der Erfindung weist der Reinigungsschaft wenigstens eine Längskante auf. Während der Benutzung des Reinigungswerkzeugs wird mit Hilfe dieser Längskante der Zahnbelag (Plaque) von den Zähnen des Anwenders abgewischt.

Nach einem weiteren Merkmal der Erfindung weist der Reinigungsschaft einen im wesentlichen quadratischen Querschnitt auf. Dies hat zur Folge, daß aufgrund der an dem Reinigungsschaft vorhandenen vier Längskanten eine verbesserte Reinigungswirkung erzielbar ist.

Von Vorteil weist der im Querschnitt im wesentlichen quadratische Reinigungsschaft eine Seitenlänge von ca. 0,3 mm auf.

Bei einer weiteren Ausgestaltung der Erfindung stehen von der Oberfläche des Reinigungsschafts eine Mehrzahl von Zacken ab. Während der Benutzung des Reinigungswerkzeugs dienen diese Zacken zum Ablösen des Zahnbelages von den Zähnen des Benutzers. Es versteht sich, daß der Reinigungsschaft an den Längsseiten auch mit Versteifungsrippen versehen werden kann, die als Reinigungskanten wirken.

Der Reinigungsschaft hat vorzugsweise eine Länge zwischen 10 und 15 mm. Die Dicke des Reinigungsschafts nimmt vorzugsweise Werte zwischen 0,1 und 0,5 mm ein. Die Höhe und die Breite der Zacken weisen vorzugsweise Werte zwischen 0,1 und 0,3 mm auf.

Nach einer vorteilhaften Weiterbildung der Erfindung besteht das Reinigungswerkzeug aus Kunststoff. Dies ermöglicht eine kostengünstige Herstellung des Reinigungswerkzeuges.

Dadurch, daß der Reinigungsschaft durch gezielte Massenanhäufung mit Unwucht versehen ist, wird der Reinigungsschaft während der Rotation aus der Ruhelage peitschenartig ausgelenkt, wodurch eine Reinigung der Zahnzwischenräume äußerst vorteilhaft begünstig wird.

Bei einer weiteren Ausgestaltung der Erfindung ist das Reinigungswerkzeug auf das Zahnreinigungsgerät aufsteckbar. Auf diese Weise ist es möglich, daß der Benutzer ein verschlissenes Reinigungswerkzeug schnell und unkompliziert gegen ein neues, baugleiches Reinigungswerkzeug austauschen kann.

Aufgrund der dünnen und länglichen Ausgestaltung des Reinigungsschaftes kann das Reinigungswerkzeug zur Reinigung auch enger Zahnzwischenräume verwendet werden. Dadurch, daß der flexible Reinigungsschaft in eine Rotation um seine Längsachse versetzbar ist, fädelt sich dieser selbsttätig in die Zahnzwischenräume ein. Verletzungen, wie sie beispielsweise beim unsachgemäßen manuellen Einfädeln eines Zahnseidefadens in enge Zahnzwischenräume aufgrund der Unkenntnis oder Unerfahrenheit des Anwenders entstehen können, sind bei dem erfindungsgemäßen Reinigungswerkzeug aufgrund des selbsttätigen Einfädelns weitgehendst ausgeschlossen. Durch die einstückige Ausgestaltung des gesamten Reinigungswerkzeugs wird eine preisgünstige Herstellung erreicht.

Die Erfindung betrifft auch ein Reinigungswerkzeug mit einem Reinigungsschaft in Kombination mit einem Aufsatzteil zum Aufstecken auf ein Zahnreinigungsgerät, wobei das Reinigungswerkzeug von einem Aufsatzteil aufgenommen und in dem Aufsatzteil verschiebbar und drehbar angeordnet ist.

Eine weitere, eigenständige Ausgestaltung des Reinigungswerkzeuges mit einem Reinigungsschaft in Kombination mit einem Aufsatzteil zum Aufstecken auf ein Zahnreinigungsgerät besteht darin, daß das Reinigungswerkzeug von dem Aufsatzteil aufgenommen ist und daß das Aufsatzteil mit Mitteln zur lösbaren Festlegung des Reinigungswerkzeuges in einer Transportstellung versehen ist, in der sich das Reinigungswerkzeug vollständig innerhalb des Aufsatzteils befindet.

Mit einem derartigen Reinigungswerkzeug ist eine besonders effektive Reinigung insbesondere der Zahnzwischenräume möglich, wobei dieses Reinigungswerkzeug insbesondere in Kombination mit dem Zahnreinigungsgerät einfach und sicher von dem Benutzer handhabbar ist. Die abhängigen, auf die unabhängigen, ein Reinigungswerkzeug betreffenden Ansprüche rückbezogenen Ansprüche betreffen vorteilhafte Ausgestaltungen.

Weitere Merkmale, Vorteile und Anwendungsmöglichkeiten der Erfindung ergeben sich aus den nachfolgenden Beschreibungen der Ausführungsbeispiele, die in der Zeichnung näher dargestellt sind.

Es zeigen:
- Fig. 1: ein Zahnreinigungsgerät mit eingestecktem Reinigungswerkzeug in einer Perspektivansicht,
- Fig. 2: das Reinigungswerkzeug der Fig. 1 in einer vergrößerten Darstellung,
- Fig. 3: einen Querschnitt durch das Reinigungswerkzeug der Fig. 2 entlang der Ebene III der Fig. 4 und
- Fig. 4: eine Seitenansicht des Reinigungswerkzeugs der Fig. 2 aus der Richtung IV der Fig. 3,
- Fig. 5: eine teilweise geschnittene, schematische Darstellung eines Ausführungsbeispieles eines erfindungsgemäßen Zahnreinigungsgerätes in einer Seitenansicht,
- Fig. 6: eine vergrößerte und teilweise geschnittene, schematische Darstellung des auf das Griffteil des Zahnreinigungsgerätes aufgesteckten Aufsatzteiles in der Ruhestellung,
- Fig. 7: eine vergrößerte und teilweise geschnittene, schematische Darstellung des auf das Griffteil des Zahnreinigungsgerätes aufgesteckten Aufsatzteiles in der Arbeitsstellung,
- Fig. 8: eine vergrößerte und teilweise geschnittene, schematische Darstellung des Aufsatzteiles in der Transportstellung,
- Fig. 9: eine vergrößerte und teilweise geschnittene, schematische Darstellung des Bereiches, in dem das Aufsatzteil auf das Griffteil aufgesteckt ist,
- Fig. 10: eine schematische Darstellung eines Querschnittes des Aufsatzteiles entlang der Ebene A-A der Fig. 9, und
- Fig. 11: eine schematische Darstellung eines Querschnittes des Griffteiles entlang der Ebene A-A der Fig. 9.

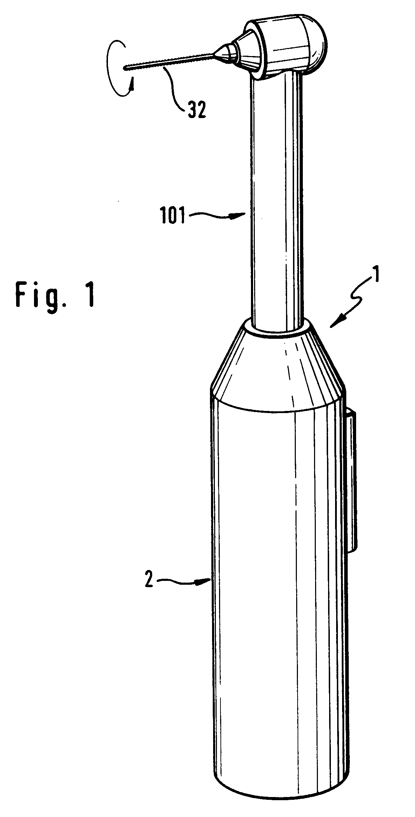

In Fig. 1 ist ein Zahnreinigungsgerät 1 mit einem aufgesteckten Reinigungswerkzeug 32 dargestellt. Das Zahnreinigungsgerät 1 weist einen Griffteil 2 auf, der einen vom Benutzer ein- und ausschaltbaren eletromotorischen Antrieb enthält. An das Griffteil 2 schließt sich ein Trägerteil 101 an, das der Übertragung und gegebenenfalls Richtungsumlenkung der von dem elektromotorischen Antrieb erzeugten Rotationsbewegung dient. Auf das Kopfende des Trägerteils 101 ist das Reinigungswerkzeug 32 aufsteckbar. Das Reinigungswerkzeug 32 ist in der Fig. 1 in einem Winkel von etwa 90° zur Längsachse des Trägerteils 101 und des Griffteils 2 am freien Ende des Trägerteils angeordnet. Es ist jedoch auch möglich, daß das Reinigungswerkzeug 32 in Richtung der Längsachse des Trägerteils 101 und des Griffteils 2 angeordnet ist bzw. zwischen diesen Positionen verstellbar ist. Das Reinigungswerkzeug 32 ist auf das freie Ende des Trägerteils 101 derart aufgesteckt, daß es von dem elektromotorischen Antrieb des Zahnreinigungsgeräts 1 in eine Rotation um seine Längsachse versetzbar ist. Die Drehzahl dieser Rotation kann beispielsweise etwa 3000 1/min oder auch mehr betragen.

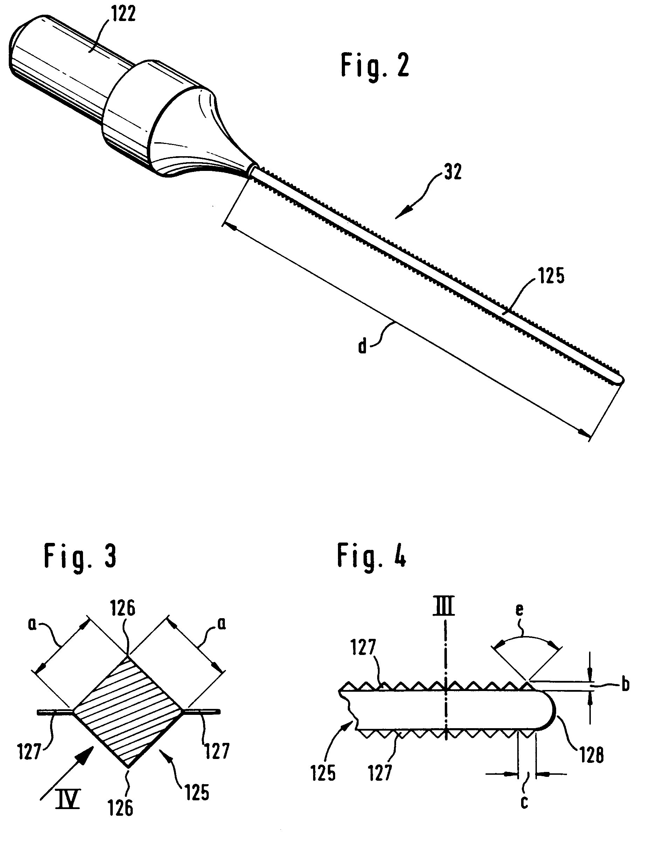

Das Reinigungswerkzeug 32 wird nachfolgend anhand der Figuren 2-4 näher erläutert.

Gemäß der Fig. 2 besteht das Reinigungswerkzeug 32 aus einem Einspannschaft 122 und einem Reinigungsschaft 125, wobei der Einspannschaft 122 mit einem Durchmesser von ca. 1,5 mm erheblich dicker als der Reinigungsschaft 125 mit einem mittleren Durchmesser von ca. 0,3 mm ausgebildet ist. Mit Hilfe des Einspannschaftes 122 wird das Reinigungswerkzeug 32 auf das freie Ende des Trägerteils 101 des Zahnreinigungsgerätes 1 aufgesteckt. Entsprechend der Fig. 2 ist der Einspannschaft 122 zylindrisch ausgestaltet, es ist jedoch auch möglich, daß der Einspannschaft 122 eine andere Querschnittsform aufweist, oder daß der Einspannschaft 122 mit zusätzlichen Längsnuten oder Längsstegen zur drehfesten Verbindung des Reinigungswerkzeuges 32 mit dem elektromotorischen Antrieb des Zahnreinigungsgerätes 1 versehen ist. Der Reinigungsschaft 125 ist über einen Übergangsbereich mit dem Einspannschaft 122 verbunden und dient der Reinigung der Zähne. Gemäß der Fig. 2 weist der Reinigungsschaft 125 eine Länge d von etwa 12 mm auf und besitzt eine Dicke von 0,3 - 0,4 mm +/- 0,1 mm, die somit wesentlich geringer ist als seine Länge.

Wie aus der Fig. 3 hervorgeht, besitzt der Reinigungsschaft 125 eine quadratische Querschnittsfläche. Die vier Ecken dieser quadratischen Querschnittsfläche bilden Längskanten 126, die sich im wesentlichen über die gesamte Länge d des Reinigungsschaftes 125 erstrecken. Die Querschnittslänge a des quadratischen Querschnitts beträgt etwa 0,3 mm.

Auf der Oberfläche des Reinigungsschaftes 125, also auf der Fläche zwischen den Längskanten 126, sind eine Vielzahl von abstehenden Zacken 127 vorgesehen, wie in der Fig. 4 schematisch dargestellt. Die Höhe b dieser Zacken 127 beträgt etwa 0,2 mm. Die Breite c einer Zacke 127 beträgt ebenfalls etwa 0,2 mm. Ausgehend von einer breiten Basis auf der Oberfläche des Reinigungsschaftes 125 laufen die Zacken 127 jeweils Spitz zu. Der Spitzenwinkel e der Zacken 127 beträgt dabei etwa 90°.

Endseitig des Reinigungsschaftes 125 ist von Vorteil eine im wesentlichen stumpfe Verrundung 128 vorgesehen, deren Radius beispielsweise 0,2 mm betragen kann. Hierdurch wird ein problemloses Einführen des Reinigungswerkzeuges in die Zahnzwischenräume erleichtert. Das gesamte, aus Einspannschaft 122 und Reinigungsschaft 125 bestehende Reinigungswerkzeug 32 ist als einstückiges Bauteil ausgebildet und besteht aus Kunststoff und kann im Kunststoffspritzguß-Verfahren hergestellt werden. Besonders vorteilhaft ist es, eine Kunststoffaser zu verwenden, die ähnliche Eigenschaften wie Zahnseidefäden hat. Desweiteren wird eine problemlose Herstellung des Reinigungswerkzeuges 32 dadurch erleichtert, daß ein Kunststoff mit guten Fließeigenschaften eingesetzt wird.

Insbesondere mit Hilfe der Längskanten 126 wird bei Benutzung des Reinigungswerkzeuges 32 die Plaque von den Zähnen abgewischt. Die Zacken 127 dienen zum Lösen der Plaque-Bakterien von den Zähnen. Es versteht sich, daß mit Hilfe des Reinigungswerkzeuges 32 auch Speisereste von den Zähnen entfernt werden können. Aufgrund der dünnen und länglichen Ausgestaltung des Reinigungswerkzeuges 32 ist es dabei möglich, auch eine Reinigung in engen Zahnzwischenräumen vorzunehmen.
Aufgrund der hohen Drehzahl des Reinigungswerkzeuges 32 von ca. 3000 1/min oder mehr fädelt sich der flexible Reinigungsschaft 125 des Reinigungswerkzeuges 32 selbsttätig in die zu reinigenden Zahnzwischenräume ein, selbst wenn das Zahnreinigungsgerät 1 vom Benutzer nicht exakt positioniert wird, was insbesondere an unzugänglichen Stellen des Gebisses häufig der Fall ist. Die hohe Drehzahl des Reinigungswerkzeuges 32 sorgt zudem für eine rasche und gründliche Entfernung des Zahnbelages und ist somit herkömmlichen Reinigungswerkzeugen für die Zahnzwischenräume, wie z. B. handbetätigten Zahnstochern, überlegen.

Der Reinigungsschaft 125 bzw. das gesamte Reinigungswerkzeug 32 besteht vorzugsweise aus Polyesterelastomer, so daß der Reinigungsschaft 125 auch während der Benutzung bei einer Rotation von ca. 3000 1/min +/- 2000 1/min um bis zu 180° umgebogen werden kann.

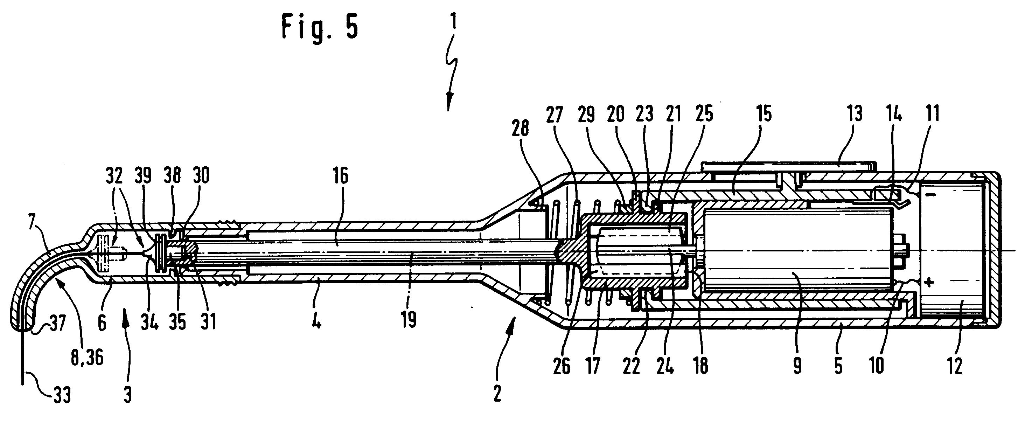

Fig. 5 zeigt ein Zahnreinigungsgerät 1, das aus einem Griffteil 2 und einem aufgesteckten Aufsatzteil 3 zusammengestzt ist. Das Griffteil 2 ist länglich ausgebildet und besitzt einen kreisförmigen Querschnitt. In einem dem Aufsatzteil 3 zugewandten Teil 4 ist der Durchmesser des Griffteils 2 kleiner als in einem von dem Aufsatzteil 3 abgewandten Teil 5 des Griffteils 2. Das Aufsatzteil 3 ist ebenfalls im wesentlichen länglich ausgebildet und besitzt einen kreisförmigen Querschnitt. Der Durchmesser eines dem Griffteil 3 zugewandten Teils 6 des Aufsatzteiles 2 entspricht dem Durchmesser des Teils 4 des Griffteils 2. Eine dem Griffteil 2 abgewandte Führungsröhre 7 des Aufsatzteils 3 besitzt einen kleineren Durchmesser und ist mit einer Biegung 8 versehen.

In dem Teil 5 des Griffteils 2 ist ein elektrisch angetriebener Motor 9 ortsfest untergebracht, der über eine elektrische Leitung 10 mit einer Spannungsquelle 12, insbesondere einem wiederaufladbaren Akkumulator verbunden ist. Ein in Längsrichtung verschiebbarer Schalter 13 ist ebenfalls in dem Teil 5 des Griffteils 2 untergebracht. An dem Schalter 13 ist ein elektrisch leitfähiger Kontakt 14 angebracht, der seinerseits über eine elektrische Leitung 11 mit der Spannungsquelle 12 verbunden ist. Des weiteren ist an dem Schalter 13 ein Kopplungsglied 15 angebracht, das der Kopplung des Schalters 13 mit einer Antriebswelle 16 dient.

Die Antriebswelle 16 erstreckt sich durch den gesamten Teil 4 bis in den Teil 5 des Griffteils 2 hinein und ist im Bereich des Griffteils 2 an seinem dem Motor 9 zugewandten freien Ende zu einer topfförmigen Aufnahme 17 mit einer Öffnung 18 ausgebildet. Der Motor 9, die Antriebswelle 16 und die topfförmige Aufnahme 17 sind konzentrisch zu einer gemeinsamen Achse 19 angeordnet, wobei die Öffnung 18 der topfförmigen Aufnahme 17 dem Motor 9 zugewandt ist.

Von der radialen Außenseite der topfförmigen Aufnahme 17 stehen zwei zueinander beabstandete Ringleisten 20, 21 nach außen ab, die eine Ringnut 22 bilden, in die eine von dem Kopplungsglied 15 nach innen abstehende Ringleiste 23 eingreift. Die Ringleiste 23 greift dabei derart in die Ringnut 22 ein, daß ein Verschieben des Schalters 13 in Längsrichtung gleichzeitig ein Verschieben der topfförmigen Aufnahme 17 ebenfalls in Längsrichtung bewirkt. Die Ringleiste 23 ist in Umfangsrichtung feststehend, während die topfförmige Aufnahme 17 mit der Ringnut 22 um die Ringleiste 23 rotieren kann. Die topfförmige Aufnahme 17 kann somit unabhängig von der Stellung des Schalters 13 um die Achse 19 rotieren. Es versteht sich, daß im Bereich der Ringleiste 23 und der zugeordneten Ringnut 22 zusätzlich noch ein nicht dargestelltes Lager oder dergleichen angeordnet sein kann, mit dem die Reibung zwischen der Ringleiste 23 und der Ringnut 22 vermindert und damit die Rotation der topfförmigen Aufnahme 17 um die Achse 19 erleichtert werden kann.

Auf der der Öffnung 18 der topfförmigen Aufnahme 17 zugewandten Seite ragt eine Motorwelle 24 aus dem Motor 9, die wie der Motor 9 konzentrisch zur Achse 19 angeordnet ist. Die Motorwelle 24 ist mit wenigstens einem, vorzugsweise jedoch mit drei Flügeln 25 versehen, die von der Motorwelle 24 radial nach außen abstehen und sich in Längsrichtung erstrecken. Die topfförmige Aufnahme 17 ist in ihrem Innenraum mit einer zugeordneten Anzahl von Längsstegen 26 versehen, die radial nach innen abstehen und sich ebenfalls in Längsrichtung erstrecken. Die Flügel 25 ragen durch die Öffnung 18 in den Innenraum der topfförmigen Aufnahme 17 und greifen zwischen die Längsstege 26 ein. Dabei überlappen sich die Flügel 25 und die Längsstege 26 auf einer Länge in Längsrichtung, die größer ist als die maximale Länge, um die der Schalter 13 in Längsrichtung verschiebbar ist.

Durch die Flügel 25 und die Längsstege 26 wird eine Rotation der Motorwelle 24 auf die topfförmige Aufnahme 17 und damit auf die Antriebswelle 16 übertragen. Durch die Überlappung der Flügel 25 und der Längsstege 26 in Längsrichtung ist es möglich, daß die topfförmige Aufnahme 17 über den Schalter 13 verschoben werden kann, ohne daß dadurch die Übertragung der Rotation der Motorwelle 24 auf die Antriebswelle 16 beeinflußt wird. Es versteht sich, daß diese konstruktive Kopplung der Motorwelle 24 und der Antriebswelle 16 über die Flügel 25 und die Längsstege 26 auch auf eine andere Art und Weise ausgestaltet sein kann, beispielsweise durch ein entsprechendes Getriebe oder dergleichen.

Zwischen der dem Teil 4 des Griffteils 2 zugewandten Seite der Ringleiste 20 und dem Übergangsbereich zwischen dem Teil 5 und dem Teil 4 des Griffteils 2 ist eine Feder 27 angeordnet, die mit Hilfe von Stützwänden 28, 29 in ihrer Position festgelegt ist. Die Feder 27 erzeugt eine Kraft, die gegen ein Verschieben des Schalters 13 in Richtung zum Aufsatzteil 3 gerichtet ist. Dies bewirkt, daß der Schalter 13 und damit die Antriebswelle 16 durch die Feder 27 ohne äußere Einwirkung immer automatisch in die von dem Aufsatzteil 3 abgewandte Richtung gedrückt werden.

Wie bereits geschildert, erstreckt sich die Antriebswelle 16 über den gesamten Teil 4 des Griffteils 2. An dem dem Aufsatzteil 3 zugewandten Ende des Griffteils 2 ist die Antriebswelle 16 von einer nach innen von dem Griffteil 2 abstehenden Ringleiste 30 geführt. Des weiteren ragt die Antriebswelle 16 dort geringfügig aus dem Griffteil 2 heraus und ist an ihrem freien Ende mit einer Bohrung 31 versehen, die konzentrisch zur Achse 19 angeordnet ist.

In dem auf das Griffteil 2 aufgesteckte Aufsatzteil 3 ist ein Reinigungswerkzeug 32 in Längsrichtung verschiebbar untergebracht. Das Reinigungswerkzeug 32 weist einen Reinigungsschaft 33 auf, der länglich und dünn ausgestaltet ist. Vorzugsweise ist der Reinigungsschaft 33 etwa
30 mm lang und besitzt einen Durchmesser von etwa 0,5 mm. Der Reinigungsschaft 33 ist aus Kunststoff hergestellt, insbesondere aus einem Polyesterelastomer, zum Beispiel Hytrel. Der Reinigungsschaft 33 ist flexibel und erlaubt auch bei einer Rotation um seine Längsachse eine Biegung um einen Winkel bis zu mindestens 150 Grad.

An seinem der Antriebswelle 16 zugewandten Ende weist das Reinigungswerkzeug 32 einen kreisförmigen Sockel 34 auf, der mit dem Reinigungsschaft 33 verbunden ist, sowie einen Zapfen 35, der mit dem Sockel 34 verbunden ist. Der Zapfen 35 des Reinigungswerkzeuges 32 ist der Bohrung 31 der Antriebswelle 16 zugeordnet. Der Zapfen 35 und die Bohrung 31 können einen Preßsitz bilden oder es ist gleichermaßen möglich, daß die Querschnitsform des Zapfens 35 und der Bohrung 31 aneinander angepaßt sind, beispielsweise in der Form eines Mehrecks oder dergleichen.

Wie bereits erläutert wurde, ist das Aufsatzteil 3 auf das Griffteil 2 aufgesteckt. Des weiteren ist der Zapfen 35 drehfest in die Bohrung 31 eingesteckt. Der Reinigungsschaft 33 erstreckt sich von dem Sockel 34 zu der Führungsröhre 7 und ist dann durch diese Führungsröhre 7 hindurchgesteckt.

Aufgrund der Biegung 8 der Führungsröhre 7 weist auch der Reinigungsschaft 33 eine entsprechende Biegung 36 auf. In den Figuren ist für die Biegungen 8 und 36 ein Winkel von etwa 90 Grad vorgesehen. Es versteht sich, daß die Biegungen 8 und 36 auch einen anderen Winkel aufweisen können, insbesondere einen Winkel im Bereich von etwa 30 Grad bis etwa 150 Grad.

Das freie Ende der Führungsröhre ist mit einer im wesentlichen halbkugelförmigen Verrundung 37 versehen. Der Durchmesser dieser Verrundung 37 beträgt einen Wert im Bereich von etwa 1 mm bis etwa 4 mm, insbesondere einen Wert von etwa 2,5 mm.

Das in der Fig. 5 dargestellte Zahnreinigungsgerät 1 besitzt zwei Arbeitszustände, einen ausgeschalteten Zustand mit einer Ruhestellung des Reinigungswerkzeuges 32 und einen eingeschalteten Zustand mit einer Arbeitsstellung des Reinigungswerkzeuges 32. In der Fig. 5 sind die Ruhestellung und die Arbeitsstellung des Reinigungswerkzeuges 32 gleichzeitig dargestellt, was sich daran zeigt, daß der Sockel 34 und der Bolzen 35 des Reinigungswerkzeuges 32 zweimal dargestellt sind, nämlich in den beiden genannten Arbeitszuständen. Die Antriebswelle 16 sowie das übrige Zahnreinigungsgerät 1 sind in der Fig. 5 jedoch einheitlich im ausgeschalteten Zustand und damit in der Ruhestellung dargestellt.

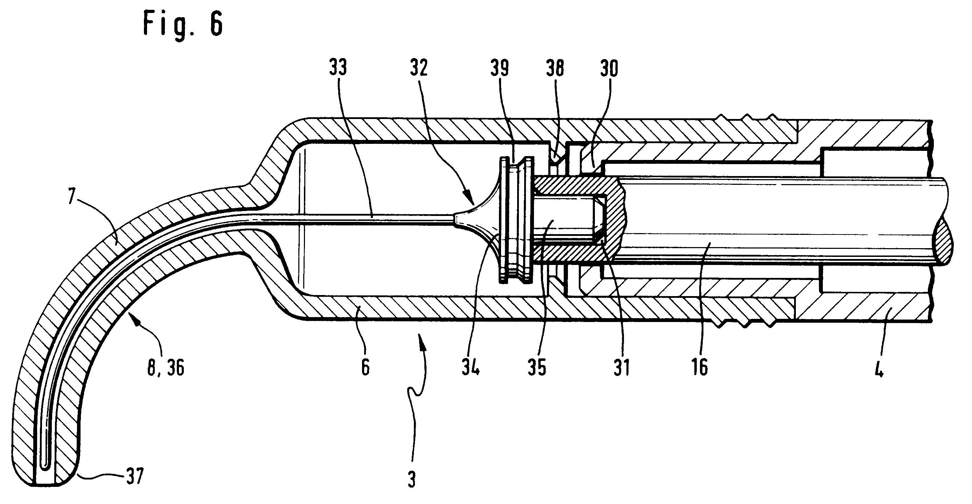

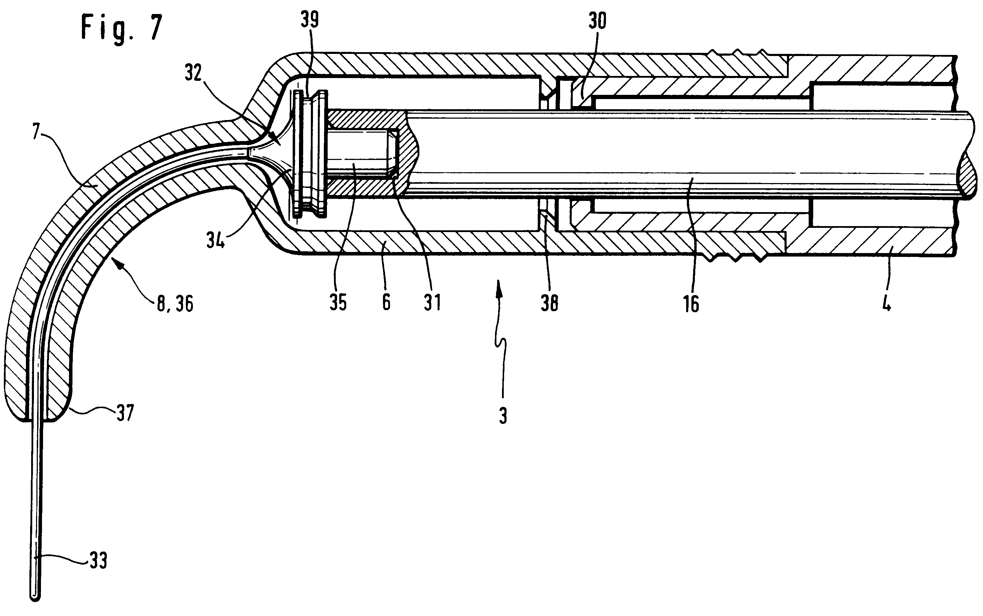

Zur besseren Verständlichkeit des eingeschalteten und des ausgeschalteten Zustands mit der zugehörigen Arbeits- und Ruhestellung sind die Fig. 6 und 7 vorgesehen. Die Fig. 6 zeigt die Ruhestellung des Reinigungswerkzeuges 32 und Fig. 7 zeigt die Arbeitsstellung desselben. Die nachfolgende Beschreibung nimmt zuerst vorzugsweise Bezug auf die beiden letztgenannten Fign. 6 und 7, bei der Erläuterung der Funktionsweise ist jedoch dann vorzugsweise wieder die Fig. 5 zugrundezulegen.

In der in der Fig. 6 dargestellten Ruhestellung ist das Reinigungswerkzeug 32 und insbesondere der Reinigungsschaft 33 vollständig innerhalb des Aufsatzteiles 3 angeordnet. Der Sockel 34 und der Zapfen 35 befinden sich in der unmittelbaren Nähe des dem Aufsatzteil 3 zugewandten Endes des Griffteils 2. Im Unterschied dazu ist in der in der Fig. 7 dargestellten Arbeitsstellung das Reinigungswerkzeug 32 nicht vollständig innerhalb des Aufsatzteiles 3 angeordnet. Das freie Ende des Reinigungsschafts 33 ragt aus dem freien Ende der Führungsröhre 7 heraus. Vorzugsweise beträgt die Länge, mit der der Reinigungsschaft 33 aus der Führungsröhre heraussteht etwa 10 mm bis etwa 15 mm, insbesondere einen Wert von etwa
12 mm. Dies wird dadurch erreicht, daß der Sockel 34 und der Zapfen 35 des Reinigungswerkzeuges 32 in Längsrichtung von dem Griffteil 2 weg verschoben angeordnet sind. Der Sockel 34 und der Zapfen 35 sind nicht mehr in der Nähe des Griffteils 2 angeordnet, sondern nunmehr etwa im Übergangsbereich von dem Teil 6 des Aufsatzteiles 3 zu der Führungsröhre 7. Der Sockel 34 und der Zapfen 35 sind genau um die gleiche Länge innerhalb des Aufsatzteils 3 verschoben, wie der Reinigungsschaft 33 über die Führungsröhre 7 hinaussteht.

Im ausgeschalteten Zustand befindet sich der Schalter 13 entsprechend der Fig. 5 in seiner Ausschaltstellung. Der Kontakt 14 hat keine elektrische Verbindung mit der elektrisch leitfähigen Oberfläche des Motors 9. Der Motor 9 ist deshalb ausgeschaltet. Die Motorwelle 24 und damit auch die Antriebswelle 16 und das Reinigungswerkzeug 32 rotieren nicht. Durch die Stellung des Schalters 13 und die von der Feder 27 ausgeübte Kraft auf die topfförmige Aufnahme 17 befindet sich auch die Antriebswelle 16 in der in der Fig. 5 dargestellten Ruhestellung. Dies hat zur Folge, daß aufgrund der in Richtung zum Motor 9 hin zurückgezogenen Position der Antriebswelle 16 auch das Reinigungswerkzeug 32 sich in seiner in der Fig. 6 dargestellten Ruhestellung befindet, in der insbesondere der Reinigungsschaft vollständig innerhalb des Aufsatzteiles 3 angeordnet ist.

Verschiebt nun ein Benutzer den Schalter 13 in Längsrichtung zum Aufsatzteil 3 hin, so berührt der Kontakt 14 die elektrisch leitfähige Oberfläche des Motors 9. Der Stromkreis für den Betrieb des Motors 9 wird dadurch über die Leitung 10, die Spannungsquelle 12, den Kontakt 14 und die Leitung 11 geschlossen. Die Motorwelle 24 rotiert somit um die Achse 19. Über die Flügel 25 und die Längsstege 26 wird diese Rotation auf die Antriebswelle 16 übertragen. Über die Bohrung 31 und den Zapfen 35 wird dann die Rotation auf das Reinigungswerkzeug 32 übertragen, so daß der Reinigungsschaft 33 teilweise geradlinig und teilweise entlang seiner Biegung 36 um seine eigene Achse rotiert.

Mit dem Verschieben des Schalters 13 durch den Benutzer wird gleichzeitig über die Ringleiste 23 und die Ringnut 22 die Antriebswelle 16 in dieselbe Richtung verschoben. Diese Bewegung wird über die Bohrung 31 und den Zapfen 35 an das Reinigungswerkzeug 32 weitergegeben. Dies hat zur Folge, daß der Reinigungsschaft 33 sich aus seiner Ruhestellung von dem Griffteil 2 weg in Richtung zu seiner in der Fig. 7 dargestellten Arbeitsstellung bewegt. Ist der Schalter 13 dann vollständig in seine maximal zulässige Einschaltstellung verschoben, so ragt der Reinigungsschaft maximal aus der Führungsröhre heraus, wie dies in der Fig. 7 dargestellt ist. Der Benutzer kann nunmehr mit Hilfe des rotierenden und vollständig ausgefahrenen Reinigungsschaftes 33 die Zwischenräume zwischen den Zähnen reinigen.

Läßt der Benutzer den Schalter 13 wieder los, so wird der Schalter 13 durch die Kraft der Feder 27 wieder in seine Ausschaltstellung zurückgeschoben. Dies bewirkt, daß auch das Reinigungswerkzeug 32 wieder sich zurück in seine Ruhestellung begibt. Gleichzeitig berührt der Kontakt 14 nicht mehr den Motor 9, so daß der Motor 9 wieder ausgeschaltet ist. Das Zahnreinigungsgerät 1 befindet sich wieder in dem bereits erläuterten ausgeschalteten Zustand.

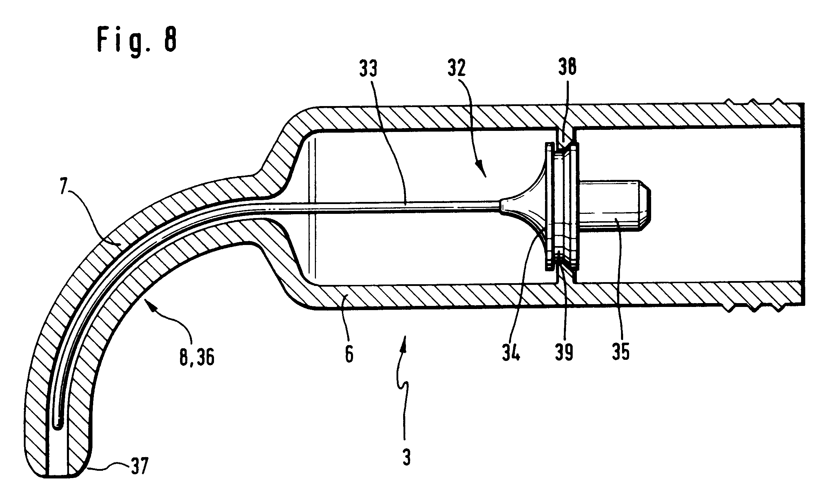

In der Fig. 8 ist das Aufsatzteil 3 mit dem darin untergebrachten Reinigungswerkzeug 32 separat dargestellt, also in einem von dem Griffteil 2 abgenommenen Zustand. Das Aufsatzteil 3 weist etwa mittig in seinem Teil 6 eine nach innen abstehende Ringleiste 38 auf. Des weiteren ist der kreisförmige Sockel 34 des Reinigungswerkzeuges 32 mit einer an die Ringleiste 38 angepaßten Ringnut 39 versehen. In der in der Fig. 8 dargestellten Transportstellung des Reinigungswerkzeuges 32 ist die Ringnut 39 in die Ringleiste 38 eingerastet. Das Reinigungswerkzeug 32 ist dadurch in dem Aufsatzteil 3 festgelegt. Die Ring-leiste 38 und die Ringnut 39 sind derart angeordnet, daß in der beschriebenen Transportstellung das Reinigungswerkzeug 32 sich vollständig innerhalb des Aufsatzteiles 3 befindet.

Wird das Aufsatzteil 3 mit dem eingerasteten Reinigungswerkzeug 32 auf das Griffteil 2 aufgesteckt, so wird dadurch gleichzeitig der Zapfen 35 in die Bohrung 31 eingeführt. Kurz bevor das Aufsatzteil 3 vollständig auf das Griffteil 2 aufgesteckt ist, wird die Ringleiste 38 aus der Ringnut 39 herausgedrückt, so daß nunmehr das Reinigungswerkzeug 32 nicht mehr im Aufsatzteil 3 festgelegt, sondern nunmehr über den Zapfen 35 und die Bohrung 31 mit der Antriebswelle 16 gekoppelt ist.

Wird das Aufsatzteil 3 von dem Griffteil 2 abgezogen, so stößt der Sockel 34 an der Ringleiste 38 an, so daß der Zapfen 35 des Reinigungswerkzeugs 32 aus der Bohrung 35 herausgezogen wird. Das Reinigungswerkzeug 32 bleibt dadurch nicht auf der Antriebswelle 16 stecken, sondern wird mit dem Aufsatzteil 3 abgezogen.

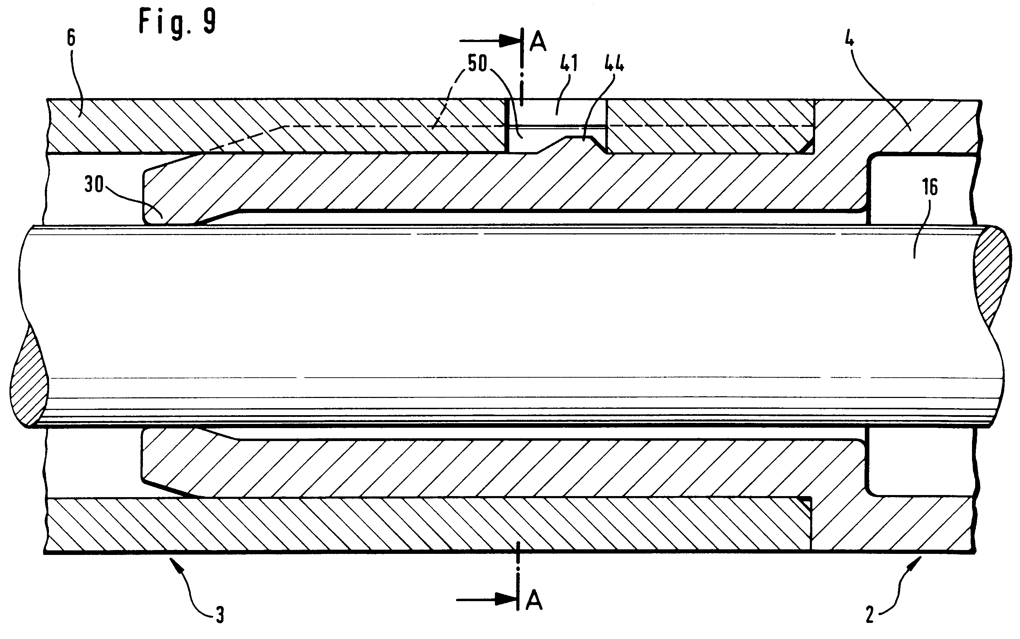

Anhand der Fign. 9 bis 11 wird nachfolgend erläutert, wie das Aufsatzteil 3 auf das Griffteil 2 aufgesteckt ist. Wie dargestellt ist, weist das Aufsatzteil 3 drei Öffnungen 40, 41 und 42 auf, die im Abstand von etwa 90 Grad auf dem Umfang des Aufsatzteiles 3 angeordnet sind. Eine vierte Öffnung fehlt, so daß die drei vorhandenen Öffnungen 40, 41 und 42 teilweise in ungleichen Abständen auf dem Umfang des Aufsatzteiles 3 verteilt sind. Jeder der Öffnungen 40, 41 und 42 ist eine Nase 43, 44 und 45 zugeordnet, die jeweils etwa radial von dem Griffteil 2 nach außen abstehen.

Das Aufsatzteil 3 weist in dem überlappenden Bereich mit dem Griffteil 2 einen größeren Durchmesser auf, so daß die Nasen 43, 44 und 45 des Griffteils 2 in die Öffnungen 40, 41 und 42 des Aufsatzteiles 3 eingreifen können. Dies ist in der Fig. 9 dargestellt. Die Nasen 43, 44 und 45 sind in Längsrichtung abgeflacht, so daß das Griffteil 2 vom Benutzer ohne größeren Kraftaufwand in das Aufsatzteil 3 eingeführt und wieder herausgezogen werden kann. Im eingerasteten Zustand, der in der Fig. 9 gezeigt ist, sind die in die Öffnungen 40, 41 und 42 eingreifenden Nasen 43, 44 und 45 optisch sichtbar.

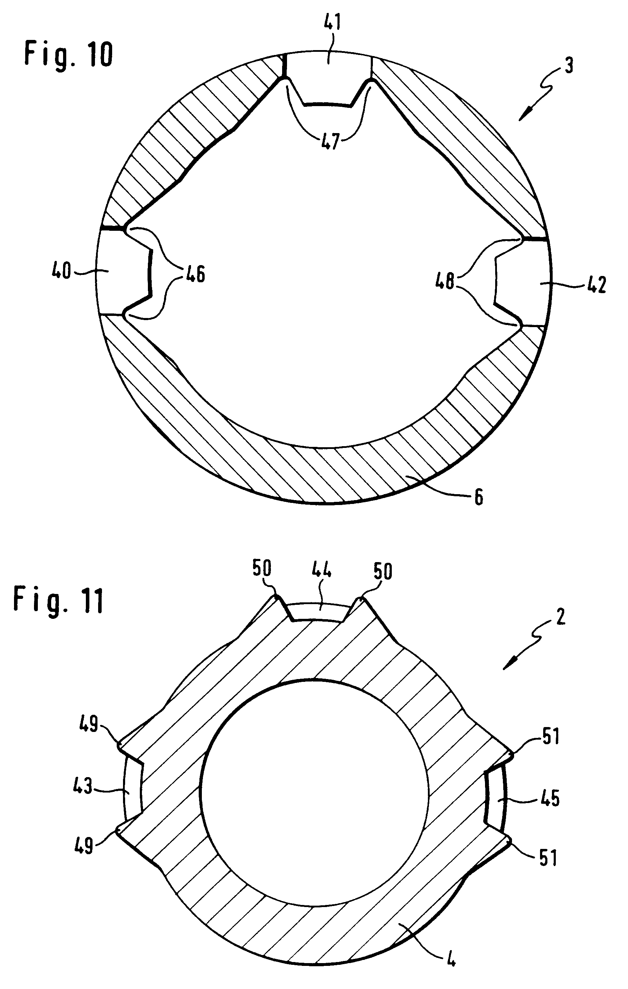

Wie insbesondere aus der Fig. 10 hervorgeht, die einen Querschnitt des Aufsatzteils 3 zeigt, ist jeder der Öffnungen 40, 41 und 42 jeweils ein Paar Längsnuten 46, 47 und 48 zugeordnet. Entsprechend ist jeder der Nasen 43, 44 und 45 jeweils ein Paar Längsleisten 49, 50 und 51 zugeordnet, wie dies insbesondere aus der Fig. 11 hervorgeht, die einen Querschnitt des Griffteils 2 zeigt. Dabei ist in Umfangsrichtung auf jeder Seite der Öffnungen 40, 41 und 42 bzw. der Nasen 43, 44 und 45 jeweils eine Längsnut bzw. eine Längsleiste angeordnet. Die Längsnuten 46, 47 und 48 sowie die Längsleisten 49, 50 und 51 sind derart aneinander angepaßt, daß sie beim Einstecken des Aufsatzteiles 3 auf das Griffteil 2 ineinander eingreifen und die Längsleisten 49, 50 und 51 in den Längsnuten 46, 47 und 48 entlanggleiten.

Mit Hilfe insbesondere der Längsnuten 46, 47 und 48 und der Längsleisten 49, 50 und 51 wird das Aufsatzteil 3 eindeutig in Umfangsrichtung auf dem Griffteil 2 festgelegt. Es versteht sich, daß für eine derartige Festlegung gegebenenfalls nicht alle der beschriebenen Längsleisten, Längsnuten, Öffnungen und Nasen erforderlich sind. Im einfachsten Fall genügt eine einzige Nase, die in eine zugeordnete durchgehende Öffnung oder nicht-durchgehende Ausnehmung eingreift und damit das Aufsatzteil 3 auf dem Griffteil 2 eindeutig in Umfangsrichtung festlegt. Eben-falls versteht es sich, daß eine derartige Festlegung auch mit Hilfe anderweitiger konstuktiver Anordnungen erreicht werden kann.

## Patentansprüche

1. Elektrisch betriebenes Zahnreinigungsgerät mit einer in einem Griffteil (2) untergebrachten Antriebswelle (16), wobei ein Reinigungswerkzeug (32) mit der Antriebswelle (16) koppelbar und in Drehung um seine Längsachse versetzbar ist, dadurch gekennzeichnet, daß das Reinigungswerkzeug (32) verschiebbar und drehbar in einem Aufsatzteil (3) untergebracht und das Aufsatzteil (3) auf das Griffteil (2) steckbar ist.

2. Zahnreinigungsgerät nach Anspruch 1, dadurch gekennzeichnet, daß das Aufsatzteil (3) auf der dem Griffteil (2) abgewandten Seite mit einer Führungsröhre (7) versehen ist, in der das dem Griffteil (2) abgewandte freie Ende des Reinigungswerkzeuges (32) geführt ist.

3. Zahnreinigungsgerät nach einem der vorhergehenden Ansprüche, dadurch gekennzeichnet, daß die Führungsröhre (7) an ihrem dem Griffteil (2) abgewandten freien Ende mit einer insbesondere etwa halbkugelförmigen Verrundung (37) versehen ist, vorzugsweise mit einem Durchmesser im Bereich von etwa 1 mm bis etwa 4 mm, insbesondere mit einem Wert von etwa 2,5 mm.

4. Zahnreinigungsgerät nach einem der vorhergehenden Ansprüche, dadurch gekennzeichnet, daß die Führungsröhre (7) des Aufsatzteils (3) eine Biegung (8) aufweist, wobei der Biegewinkel einen Wert im Bereich von etwa 30 Grad bis etwa 150 Grad, insbesondere einen Wert von etwa 90 Grad aufweist.

5. Zahnreinigungsgerät nach einem der vorhergehenden Ansprüche, dadurch gekennzeichnet, daß das Aufsatzteil (3) mit Mitteln zum lösbaren Festlegen des Reinigungswerkzeuges (32) in einer Transportstellung versehen ist, in der sich das Reinigungswerkzeug (32) vollständig innerhalb des Aufsatzteiles (3) befindet.

6. Zahnreinigungsgerät nach einem der vorhergehenden Ansprüche, dadurch gekennzeichnet, daß das Aufsatzteil (3) ein hülsenförmiges Teil (6) mit einer nach innen abstehenden Ringleiste (38) aufweist und das Reinigungswerkzeug (32) auf seiner dem Griffteil (2) zugewandten Seite mit einem scheibenförmigen Sockel (34) versehen ist, wobei der Sockel (34) eine der Ringleiste (38) zugeordnete Ringnut (39) aufweist, in der die Ringleiste (38) für die Transportstellung einrastbar ist.

7. Zahnreinigungsgerät nach einem der vorhergehenden Ansprüche, dadurch gekennzeichnet, daß das Reinigungswerkzeug (32) auf seiner dem Griffteil (2) zugewandten Seite mit Mitteln versehen ist zur lösbaren drehfesten Kopplung mit einer Antriebswelle (16), die von einem in dem Griffteil (2) untergebrachten Motor (9) antreibbar ist.

8. Zahnreinigungsgerät nach einem der vorhergehenden Ansprüche, dadurch gekennzeichnet, daß das Reinigungswerkzeug (32) und die Antriebswelle (16) mit einem Zapfen (35) und einer zugeordneten Bohrung (31) versehen sind, die zusammengefügt einen Preßsitz bilden, oder die einander zugeordnete, komplementäre Querschnittsformen aufweisen.

9. Zahnreinigungsgerät nach einem der vorhergehenden Ansprüche, dadurch gekennzeichnet, daß die Antriebswelle (16) mit einem bevorzugt in Längsrichtung des Griffteils (2) verschiebbaren Schalter (13) zum Ein- und Ausschalten des Motors (9) gekoppelt ist, wobei ein Verschieben des Schalters (13) auch ein Verschieben der Antriebswelle (16) in Längsrichtung bewirkt.

10. Zahnreinigungsgerät nach Anspruch 9, dadurch gekennzeichnet, daß der Schalter (13) zum Einschalten des Motors (9) gegen eine Feder (27) verschiebbar ist.

11. Zahnreinigungsgerät nach Anspruch 9 oder 10, dadurch gekennzeichnet, daß in der Ausschaltstellung des Schalters (13) die Antriebswelle (16) in einer hinsichtlich des Aufsatzteiles (3) zurückgezogenen Ruhestellung angeordnet ist, in der das mit der Antriebswelle (16) verbundene Reinigungswerkzeug (32) sich innerhalb des Aufsatzteiles (3) befindet.

12. Zahnreinigungsgerät nach einem der Ansprüche 9 bis 11, dadurch gekennzeichnet, daß in einer Einschaltstellung des Schalters (13) die Antriebswelle (16) in einer hinsichtlich des Aufsatzteiles (3) vorgeschobenen Arbeitsstellung angeordnet ist, in der das mit der Antriebswelle (16) verbundene Reinigungswerkzeug (32) sich zumindest teilweise außerhalb des Aufsatzteiles (3) befindet.

13. Zahnreinigungsgerät nach Anspruch 12, dadurch gekennzeichnet, daß das Reinigungswerkzeug (32) sich mit einer Länge im Bereich von etwa 8 mm bis etwa 20 mm außerhalb des Aufsatzteiles (3) befindet, insbesondere mit einer Länge von etwa 12 mm.

14. Zahnreinigungsgerät nach einem der Ansprüche 9 bis 13, dadurch gekennzeichnet, daß der fest in dem Griffteil (2) untergebrachte Motor (9) mit einer Motorwelle (24) mit in Längsrichtung sich erstreckenden Flügeln (25) und die Antriebswelle (16) an ihrem dem Motor (9) zugewandten Ende mit einer topfartigen Aufnahme (17) mit Längsstegen (26) im Inneren versehen ist, wobei die Flügel (25) der Motorwelle (24) zwischen die Längsstege (26) der topfartigen Aufnahme (17) in Längsrichtung überlappend ineinander eingreifen.

15. Zahnreinigungsgerät nach einem der vorhergehenden Ansprüche, dadurch gekennzeichnet, daß das Aufsatzteil (3) auf der dem Griffteil (2) zugewandten Seite mit Mitteln zum lösbaren Festlegen des Aufsatzteiles (3) an dem Griffteil (2) versehen ist.

16. Zahnreinigungsgerät nach Anspruch 15, dadurch gekennzeichnet, daß das Griffteil (2) und das Aufsatzteil (3) wenigstens eine abstehende Nase (43, 44, 45) und eine zugeordnete Ausnehmung aufweisen, die bei aufgestecktem Aufsatzteil (3) ineinander eingreifen.

17. Zahnreinigungsgerät nach Anspruch 16, dadurch gekennzeichnet, daß der Nase (43, 44, 45) eine das Aufsatzteil (3) durchbrechende Öffnung (40, 41, 42) zugeordnet ist.

18. Zahnreinigungsgerät nach einem der Ansprüche 15 bis 17, dadurch gekennzeichnet, daß das Aufsatzteil (3) auf der dem Griffteil (2) zugewandten Seite mit Mitteln zum eindeutigen Zuordnen des Aufsatzteiles (3) auf dem Griffteil (2) in Umfangsrichtung versehen ist.

19. Zahnreinigungsgerät nach einem der Ansprüche 15 bis 18, dadurch gekennzeichnet, daß das Griffteil (2) und das Aufsatzteil (3) wenigstens eine Längsleiste (49, 50, 51) und eine zugeordnete Längsnut (46, 47, 48) aufweisen, die bei aufgestecktem Aufsatzteil (3) ineinandergreifen.

20. Zahnreinigungsgerät nach einem der Ansprüche 16 bis 19, dadurch gekennzeichnet, daß auf beiden Seiten der Nase (43, 44, 45) bzw. Ausnehmung (40, 41, 42) jeweils eine Längsleiste (49, 50, 51) bzw. Längsnut (46, 47, 48) vorgesehen ist.

21. Zahnreinigungsgerät nach einem der Ansprüche 16 bis 20, dadurch gekennzeichnet, daß drei Nasen (43, 44, 45) bzw. Ausnehmungen (40, 41, 42) mit zugeordneten Längsleisten (49, 50, 51) bzw. Längsnuten (46, 47, 48) vorgesehen sind, die in wenigstens teilweise ungleichen Abständen auf dem Umfang des Griffteiles (2) bzw. des Aufsatzteiles (3) angeordnet sind.

22. Zahnreinigungsgerät nach einem der vorhergehenden Ansprüche, dadurch gekennzeichnet, daß das Reinigungswerkzeug (32) als einstückiges Baute ausgebildet ist, einen Reinigungsschaft (125) aufweist und von einem Motor des Zahnreinigungsgerätes (1) in Drehung versetzbar ist, der Reinigungsschaft (125) flexibel ist und aus Polyesterelastomer oder einem hinsichtlich der Biegefestigkeit gleichartigen Werkstoff, insbesondere aus Hytrel (eingetragenes Warenzeichen) besteht.

23. Zahnreinigungsgerät nach Anspruch 22, dadurch gekennzeichnet, daß der Reinigungsschaft (125) wenigstens eine Längskante (126) aufweist.

24. Zahnreinigungsgerät nach Anspruch 22 oder Anspruch 23, dadurch gekennzeichnet, daß der Reinigungsschaft (125) einen im wesentlichen quadratischen Querschnitt aufweist.

25. Zahnreinigungsgerät nach Anspruch 24, dadurch gekennzeichnet, daß die Seitenlänge (a) des quadratischen Querschnitts vorzugsweise etwa 0,3 mm beträgt.

26. Zahnreinigungsgerät nach einem der Ansprüche 22 bis 25, dadurch gekennzeichnet, daß von der Oberfläche des Reinigungsschaftes (125) eine Mehrzahl von Zacken (127) abstehen.

27. Zahnreinigungsgerät nach Anspruch 26, dadurch gekennzeichnet, daß die Höhe (b) der Zacken (127) vorzugsweise etwa 0,2 mm beträgt.

28. Zahnreinigungsgerät nach Anspruch 26 oder 27, dadurch gekennzeichnet, daß die Breite (c) der Zacken (27) vorzugsweise etwa 0,2 mm beträgt.

29. Zahnreinigungsgerät nach einem der Ansprüche 22 bis 28, dadurch gekennzeichnet, daß der Reinigungsschaft (125) durch gezielte Massenanhäufung mit einer Unwucht versehen ist.

30. Zahnreinigungsgerät nach einem der Ansprüche 22 bis 29, dadurch gekennzeichnet, daß der Reinigungsschaft (125) eine Länge von vorzugsweise 12 mm aufweist.

31. Zahnreinigungsgerät nach einem der Ansprüche 22 bis 30, dadurch gekennzeichnet, daß das Reinigungswerkzeug (32) aus Hytrel (eingetragenes Warenzeichen) besteht.

32. Zahnreinigungsgerät nach einem der Ansprüche 22 bis 31, dadurch gekennzeichnet, daß das Reinigungswerkzeug (32) auf das Zahnreinigungsgerät (1) aufsteckbar ist.

33. Zahnreinigungsgerät nach einem der Ansprüche 22 bis 32, dadurch gekennzeichnet, daß der Reinigungsschaft (125) endseitig eine im wesentlichen stumpfe Verrundung (128) aufweist.

34. Zahnreinigungsgerät nach einem der Ansprüche 22 bis 33, dadurch gekennzeichnet, daß der Reinigungsschaft (125) dünn und länglich ist.

35. Reinigungswerkzeug (32) mit einem Reinigungsschaft (125) in Kombination mit einem Aufsatzteil (3) zum Aufstecken auf ein Zahnreinigungsgerät (1) insbesondere nach einem der Ansprüche 1 bis 21, dadurch gekennzeichnet, daß das Reinigungswerkzeug (32) von dem Aufsatzteil (3) aufgenommen und in dem Aufsatzteil (3) verschiebbar und drehbar angeordnet ist.

36. Reinigungswerkzeug nach Anspruch 35, dadurch gekennzeichnet, daß das Aufsatzteil (3) mit einer Führungsröhre (7) versehen ist, in der das freie Ende des Reinigungsschaftes (125) geführt ist.

37. Reinigungswerkzeug nach Anspruch 35 oder 36, dadurch gekennzeichnet, daß die Führungsröhre (7) an ihrem freien Ende mit einer insbesondere etwa halbkugelförmigen Verrundung (37) versehen ist, vorzugsweise mit einem Durchmesser im Bereich von etwa 1 mm bis etwa 4 mm, insbesondere mit einem Wert von etwa 2,5 mm.

38. Reinigungswerkzeug nach einem der Ansprüche 35 bis 37, dadurch gekennzeichnet, daß daß die Führungsröhre (7) eine Biegung (8) aufweist, wobei der Biegewinkel einen Wert im Bereich von etwa 30 Grad bis etwa 150 Grad, insbesondere einen Wert von etwa 90 Grad aufweist.

39. Reinigungswerkzeug (32) mit einem Reinigungsschaft (125), in Kombination mit einem Aufsatzteil (3) zum Aufstecken auf ein Zahnreinigungsgerät (1) insbesondere nach einem der Ansprüche 1 bis 21, dadurch gekennzeichnet, daß das Reinigungswerkzeug (32) von dem Aufsatzteil (3) aufgenommen ist und daß das Aufsatzteil (3) mit Mitteln zum lösbaren Festlegen des Reinigungswerkzeuges (32) in einer Transportstellung versehen ist, in der sich das Reinigungswerkzeug (32) vollständig innerhalb des Aufsatzteiles (3) befindet.

40. Reinigungswerkzeug nach Anspruch 39, dadurch gekennzeichnet, daß das Aufsatzteil (3) ein hülsenförmiges Teil (6) mit einer nach innen abstehenden Ringleiste (38) aufweist und das Reinigungswerkzeug (32) mit einem scheibenförmigen Sockel (34) versehen ist, wobei der Sockel (34) eine der Ringleiste (38) zugeordnete Ringnut (39) aufweist, in der die Ringleiste (38) für die Transportstellung einrastbar ist.

41. Reinigungswerkzeug nach Anspruch 39 und 40, dadurch gekennzeichnet, daß das Reinigungswerkzeug (32) Mittel zur lösbaren drehfesten Kopplung mit einer Antriebswelle (16) aufweist.

42. Reinigungswerkzeug nach einem der Ansprüche 35 bis 41, dadurch gekennzeichnet, daß der Reinigungsschaft aus Polyesterelastomer oder einem gleichartigen Werkstoff, insbesondere Hytrel (eingetragenes Warenzeichen) besteht.

43. Reinigungswerkzeug nach einem der Ansprüche 35 bis 42, dadurch gekennzeichnet, daß der Reinigungsschaft (125) wenigstens eine Längskante (126) aufweist.

44. Reinigungswerkzeug nach Anspruch 43, dadurch gekennzeichnet, daß der Reinigungsschaft (125) einen im wesentlichen quadratischen Querschnitt aufweist.

45. Reinigungswerkzeug nach Anspruch 44, dadurch gekennzeichnet, daß die Seitenlänge (a) des quadratischen Querschnitts vorzugsweise etwa 0,3 mm beträgt.

46. Reinigungswerkzeug nach Anspruch 45, dadurch gekennzeichnet, daß von der Oberfläche des Reinigungsschaftes (125) eine Mehrzahl von Zacken (127) abstehen.

47. Reinigungswerkzeug nach Anspruch 46, dadurch gekennzeichnet, daß die Höhe (b) der Zacken (127) vorzugsweise etwa 0,2 mm beträgt.

48. Reinigungswerkzeug nach Anspruch 46 oder 47, dadurch gekennzeichnet, daß die Breite (c) der Zacken (27) vorzugsweise etwa 0,2 mm beträgt.

49. Reinigungswerkzeug nach einem der Ansprüche 35 bis 48, dadurch gekennzeichnet, daß der Reinigungsschaft (125) durch gezielte Massenanhäufung mit einer Unwucht versehen ist.

50. Reinigungswerkzeug nach einem der Ansprüche 35 bis 49, dadurch gekennzeichnet, daß der Reinigungsschaft (125) eine Länge von vorzugsweise 12 mm aufweist.

51. Reinigungswerkzeug nach einem der Ansprüche 35 bis 50, dadurch gekennzeichnet, daß das Reinigungswerkzeug (32) aus Hytrel (eingetragenes Warenzeichen) besteht.

52. Reinigungswerkzeug nach einem der Ansprüche 35 bis 51, dadurch gekennzeichnet, daß das Reinigungswerkzeug (32) auf das Zahnreinigungsgerät (1) aufsteckbar ist.

53. Reinigungswerkzeug nach einem der Ansprüche 35 bis 52, dadurch gekennzeichnet, daß der Reinigungsschaft (125) endseitig eine im wesentlichen stumpfe Verrundung (128) aufweist.

54. Reinigungswerkzeug nach einem der Ansprüche 35 bis 53, dadurch gekennzeichnet, daß der Reinigungsschaft (125) dünn und länglich ist.

## Claims

1. An electrically powered dental cleansing device with a drive shaft (16) received in a handle section (2), in which a cleansing implement (32) can be coupled to the drive shaft (16) and set in rotation about its longitudinal axis, **characterized in that** the cleansing implement (32) is slidably and rotatably received in an attachment (3), and that the attachment (3) is adapted to be push-fitted to the handle section (2).

2. The dental cleansing device as claimed in claim 1, **characterized in that** the attachment (3) has at the end remote from the handle section (2) a guide tube (7) in which the free end of the cleansing implement (32) remote from the handle section (2) is guided.

3. The dental cleansing device as claimed in any one of the preceding claims, **characterized in that** the guide tube (7) is provided with an in particular approximately hemispherical rounded portion (37) at its free end remote from the handle section (2), preferably with a diameter in the range from about 1 mm to about 4 mm, in particular about 2.5 mm.

4. The dental cleansing device as claimed in any one of the preceding claims, **characterized in that** the guide tube (7) of the attachment (3) includes a bent portion (8), with the bending angle being in the range from about 30 degrees to about 150 degrees, in particular about 90 degrees.

5. The dental cleansing device as claimed in any one of the preceding claims, **characterized in that** the attachment (3) is provided with means for releasably locating the cleansing implement (32) in a transit position in which the cleansing implement (32) is completely received within the attachment (3).

6. The dental cleansing device as claimed in any one of the preceding claims, **characterized in that** the attachment (3) is provided with a sleeve-shaped portion (6) having an inwardly projecting annular collar (38), and that the cleansing implement (32), at its end close to the handle section (2), is provided with a disk-shaped base (34) which includes an annular groove (39) operatively associated with the annular collar (38) and adapted for locking engagement with the annular collar (38) to provide the transit position.

7. The dental cleansing device as claimed in any one of the preceding claims, **characterized in that** the cleansing implement (32) has at its end close to the handle section (2) means for providing a releasable coupling to a drive shaft (16) in a non-rotating relationship thereto, said drive shaft being adapted to be driven by a motor (9) housed in the handle section (2).

8. The dental cleansing device as claimed in any one of the preceding claims, **characterized in that** the cleansing implement (32) and the drive shaft (16) are provided with a pin (35) and an associated bore (31) forming in assembled condition a press fit or having relatively associated complementary cross-sections.

9. The dental cleansing device as claimed in any one of the preceding claims, **characterized in that** the drive shaft (16) is coupled to a switch (13) preferably slidable in the longitudinal direction of the handle section (2) for energizing and deenergizing the motor (9), a displacement of the switch (13) also effecting a displacement of the drive shaft (16) in the longitudinal direction.

10. The dental cleansing device as claimed in claim 9, **characterized in that** the switch (13) for energizing the motor (9) is slidable against a spring (27).

11. The dental cleansing device as claimed in claim 9 or 10, **characterized in that** in the off-position of the switch (13) the drive shaft (16) is in an inoperative position retracted relative to the attachment (3), in which position the cleansing implement (32) connected to the drive shaft (16) is received inside the attachment (3).

12. The dental cleansing device as claimed in any one of the claims 9 to 11, **characterized in that** in an on-position of the switch (13) the drive shaft (16) is in an operative position extended relative to the attachment (3), in which position the cleansing implement (32) connected to the drive shaft (16) is at least in part outside the attachment (3).

13. The dental cleansing device as claimed in claim 12, **characterized in that** a length in the range of about 8 mm to about 20 mm, in particular a length of about 12 mm of the cleansing implement (32) is outside the attachment (3).

14. The dental cleansing device as claimed in any one of the claims 9 to 13, **characterized in that** the motor (9) fixedly accommodated in the handle section (2) has a motor shaft (24) with longitudinally extending vanes (25), and the drive shaft (16) has at its end close to the motor (9) a cup-shaped receptacle (17) with longitudinal ribs (26) in its interior, with the vanes (25) of the motor shaft (24) engaging longitudinally in the space between the longitudinal ribs (26) of the cup-shaped receptacle (17) in an overlapping fashion.

15. The dental cleansing device as claimed in any one of the preceding claims, **characterized in that** the attachment (3) has at its end close to the handle section (2) means for releasably locating the attachment (3) in position on the handle section (2).

16. The dental cleansing device as claimed in claim 15, **characterized in that** the handle section (2) and the attachment (3) include at least one projecting lug (43, 44, 45) and one associated recess which are in relative engagement with the attachment (3) fitted.

17. The dental cleansing device as claimed in claim 16, **characterized in that** the lug (43, 44, 45) is associated with an opening (40, 41, 42) extending through the attachment (3).

18. The dental cleansing device as claimed in any one of the claims 15 to 17, **characterized in that** the attachment (3) has at its end close the handle section (2) means for aligning the attachment (3) in a clearly defined position relative to the handle section (2) in the circumferential direction.

19. The dental cleansing device as claimed in any one of the claims 15 to 18, **characterized in that** the handle section (2) and the attachment (3) include at least one longitudinal ridge (49, 50, 51) and one associated longitudinal groove (46, 47, 48) which are in relative engagement with the attachment (3) fitted.

20. The dental cleansing device as claimed in any one of the claims 16 to 19, **characterized in that** one longitudinal ridge (49, 50, 51) and one longitudinal groove (46, 47, 48) each are provided on either side of the lug (43, 44, 45) and the recess (40, 41, 42), respectively.

21. The dental cleansing device as claimed in any one of the claims 16 to 20, **characterized in that** three lugs (43, 44, 45) and recesses (40, 41, 42), respectively, with associated longitudinal ridges (49, 50, 51) and longitudinal grooves (46, 47, 48), respectively, are provided, which are arranged on the periphery of the handle section (2) and, respectively, the attachment (3) at at least partly non-uniform distances.

22. The dental cleansing device as claimed in any one of the preceding claims, **characterized in that** the cleansing implement (32) is configured as an integrally formed part, includes a cleansing shaft (125) and can be set in rotation by a motor of the dental cleansing device (1), that the cleansing shaft (125) is flexible and made of a polyester elastomer or a material of similar flexural strength, in particular Hytrel (registered trademark).

23. The dental cleansing device as claimed in claim 22, **characterized in that** the cleansing shaft (125) includes at least one longitudinal edge (126).

24. The dental cleansing device as claimed in claim 22 or claim 23, **characterized in that** the cleansing shaft (125) has an essentially square cross-section.

25. The dental cleansing device as claimed in claim 24, **characterized in that** the side (a) of the square cross-section has a length of preferably 0.3 mm, approximately.

26. The dental cleansing device as claimed in any one of the claims 22 to 25, **characterized in that** a plurality of serrations (127) project from the surface of the cleansing shaft (125).

27. The dental cleansing device as claimed in claim 26, **characterized in that** the serrations (127) have a height (b) of preferably 0.2 mm, approximately.

28. The dental cleansing device as claimed in claim 26 or 27, **characterized in that** the serrations (27) have a width (c) of preferably 0.2 mm, approximately.

29. The dental cleansing device as claimed in any one of the claims 22 to 28, **characterized in that** the cleansing shaft (125) is provided with an unbalance by designed accumulation of material.

30. The dental cleansing device as claimed in any one of the claims 22 to 29, **characterized in that** the cleansing shaft (125) has a length of preferably 12 mm.

31. The dental cleansing device as claimed in any one of the claims 22 to 30, **characterized in that** the cleansing implement (32) is made of Hytrel (registered trademark).

32. The dental cleansing device as claimed in any one of the claims 22 to 31, **characterized in that** the cleansing implement (32) is adapted to be a push-fit on the dental cleansing device (1).

33. The dental cleansing device as claimed in any one of the claims 22 to 32, **characterized in that** the cleansing shaft (125) has at its one end an essentially blunt rounded portion (128).

34. The dental cleansing device as claimed in any one of the claims 22 to 33, **characterized in that** the cleansing shaft (125) is thin and elongate.

35. A cleansing implement (32) with a cleansing shaft (125), in combination with an attachment (3) to be push-fitted to a dental cleansing device (1), in particular as claimed in any one of the claims 1 to 21, **characterized in that** the cleansing implement (32) is received by the attachment (3) and is slidably and rotatably arranged in the attachment (3).

36. The cleansing implement as claimed in claim 35, **characterized in that** the attachment (3) is provided with a guide tube (7) in which the free end of the cleansing shaft (125) is guided.

37. The cleansing implement as claimed in claim 35 or 36, **characterized in that** the guide tube (7) is provided with an in particular approximately hemispherical rounded portion (37) at its free end, preferably with a diameter in the range from about 1 mm to about 4 mm, in particular about 2.5 mm.

38. The cleansing implement as claimed in any one of the claims 35 to 37, **characterized in that** the guide tube (7) includes a bent portion (8), with the bending angle being in the range from about 30 degrees to about 150 degrees, in particular about 90 degrees.

39. The cleansing implement (32) with a cleansing shaft (125), in combination with an attachment (3) to be push-fitted to a dental cleansing device (1), in particular as claimed in any one of the claims 1 to 21, **characterized in that** the cleansing implement (32) is received by the attachment (3), and that the attachment (3) is provided with means for releasably locating the cleansing implement (32) in a transit position in which the cleansing implement (32) is completely received within the attachment (3).

40. The cleansing implement as claimed in claim 39, **characterized in that** the attachment (3) is provided with a sleeve-shaped portion (6) having an inwardly projecting annular collar (38), and that the cleansing implement (32) is provided with a disk-shaped base (34) which includes an annular groove (39) operatively associated with the annular collar (38) and adapted for locking engagement with the annular collar (38) to provide the transit position.

41. The cleansing implement as claimed in claims 39 and 40, **characterized in that** the cleansing implement (32) has means for providing a releasable coupling to a drive shaft (16) in a non-rotating relationship thereto.

42. The cleansing implement as claimed in any one of the claims 35 to 41, **characterized in that** the cleansing shaft is made of a polyester elastomer or a similar material, in particular Hytrel (registered trademark).

43. The cleansing implement as claimed in any one of the claims 35 to 42, **characterized in that** the cleansing shaft (125) includes at least one longitudinal edge (126).

44. The cleansing implement as claimed in claim 43, **characterized in that** the cleansing shaft (125) has an essentially square cross-section.

45. The cleansing implement as claimed in claim 44, **characterized in that** the side (a) of the square cross-section has a length of preferably 0.3 mm, approximately.

46. The cleansing implement as claimed in claim 45, **characterized in that** a plurality of serrations (127) project from the surface of the cleansing shaft (125).

47. The cleansing implement as claimed in claim 46, **characterized in that** the serrations (127) have a height (b) of preferably 0.2 mm, approximately.

48. The cleansing implement as claimed in claim 46 or 47, **characterized in that** the serrations (27) have a width (c) of preferably 0.2 mm, approximately.

49. The cleansing implement as claimed in any one of the claims 35 to 48, **characterized in that** the cleansing shaft (125) is provided with an unbalance by designed accumulation of material.

50. The cleansing implement as claimed in any one of the claims 35 to 49, **characterized in that** the cleansing shaft (125) has a length of preferably 12 mm.

51. The cleansing implement as claimed in any one of the claims 35 to 50, **characterized in that** the cleansing implement (32) is made of Hytrel (registered trademark).

52. The cleansing implement as claimed in any one of the claims 35 to 51, **characterized in that** the cleansing implement (32) is adapted to be a push-fit on the dental cleansing device (1).

53. The cleansing implement as claimed in any one of the claims 35 to 52, **characterized in that** the cleansing shaft (125) has at its one end an essentially blunt rounded portion (128).

54. The cleansing implement as claimed in any one of the claims 35 to 53, **characterized in that** the cleansing shaft (125) is thin and elongate.

## Revendications

1. Appareil de détartrage dentaire fonctionnant à l'électricité, comprenant un arbre d'entraînement (16) logé dans une partie de poignée (2), et un outil de détartrage (32) susceptible d'être accouplé à l'arbre d'entraînement (16) et d'être mis en rotation autour de son axe longitudinal, caractérisé en ce que l'outil de détartrage (32) est logé en translation et en rotation dans une partie de coiffe (3), et en ce que la partie de coiffe (3) est enfichable sur la partie de poignée (2).

2. Appareil de détartrage dentaire selon la revendication 1, caractérisé en ce que la partie de coiffe (3) est pourvue d'un tube de guidage (7), du côté détourné de la partie de poignée (2), dans lequel est guidée l'extrémité libre de l'outil de détartrage (32) détournée de la partie de poignée (2).

3. Appareil de détartrage dentaire selon l'une des revendications précédentes, caractérisé en ce que le tube de guidage (7) est pourvu, à son extrémité libre détournée de la partie de poignée (2), d'un arrondissement (37) en particulier approximativement en forme de demi-sphère, de préférence avec un diamètre dans la plage d'environ 1 mm jusqu'à environ 4 mm, en particulier avec une valeur d'environ 2,5 mm.

4. Appareil de détartrage dentaire selon l'une des revendications précédentes, caractérisé en ce que le tube de guidage (7) de la partie de coiffe (3) présente un coude (8), et l'angle du coude a une valeur dans la plage depuis environ 30° jusqu'à environ 150°, en particulier une valeur d'environ 90°.

5. Appareil de détartrage dentaire selon l'une des revendications précédentes, caractérisé en ce que la partie de coiffe (3) est pourvue de moyens pour fixer de façon détachable l'outil de détartrage (32) dans une position de transport dans laquelle l'outil de détartrage (32) se trouve entièrement à l'intérieur de la partie de coiffe (3).

6. Appareil de détartrage dentaire selon l'une des revendications précédentes, caractérisé en ce que la partie de coiffe (3) comprend une partie en forme de fourreau (6) avec une barrette annulaire (38) en dépassement vers l'intérieur, et en ce que l'outil de détartrage (32) est pourvu de son côté tourné vers la partie de poignée (2) d'un socle (34) en forme de disque, ledit socle (34) présentant une gorge annulaire (39) associée à la barrette annulaire (38), dans laquelle la barrette annulaire (38) peut être enclenchée pour la position de transport.

7. Appareil de détartrage dentaire selon l'une des revendications précédentes, caractérisé en ce que l'outil de détartrage (32) est pourvu, sur son côté tourné vers la partie de poignée (2), de moyens pour son accouplement solidaire en rotation et détachable avec un arbre d'entraînement (16), lequel est susceptible d'être entraîné par un moteur (9) logé dans la partie de poignée (2).

8. Appareil de détartrage dentaire selon l'une des revendications précédentes, caractérisé en ce que l'outil de détartrage (32) et l'arbre d'entraînement (16) sont pourvus d'un tenon (35) et d'un perçage associé (31), qui forment une fois assemblés un emboîtement à force, ou qui présentent des formes de section transversale complémentaires et mutuellement associées.

9. Appareil de détartrage dentaire selon l'une des revendications précédentes, caractérisé en ce que l'arbre d'entraînement (6) est accouplé à un commutateur (13) mobile de préférence en direction longitudinale de la partie de poignée (2), pour mettre en route et arrêter le moteur (9), et un déplacement du commutateur (13) provoque également un déplacement de l'arbre d'entraînement (16) en direction longitudinale.

10. Appareil de détartrage dentaire selon la revendication 9, caractérisé en ce que le commutateur (13) est mobile à l'encontre d'un ressort (27) pour la mise en route du moteur (9).

11. Appareil de détartrage dentaire selon l'une ou l'autre des revendications 9 et 10, caractérisé en ce que dans la position d'arrêt du commutateur (13) l'arbre d'entraînement (16) est agencé dans une position de repos en retrait par rapport à la partie de coiffe (3), dans laquelle l'outil de détartrage (32) relié à l'arbre d'entraînement (16) se trouve à l'intérieur de la partie de coiffe (3).

12. Appareil de détartiage dentaire selon l'une des revendications 9 à 11, caractérisé en ce que, dans une position de marche du commutateur (13) l'arbre d'entraînement (16) est agencé dans une position de travail avancée par rapport à la partie de coiffe (3), dans laquelle l'outil de détartrage (32) relié à l'arbre d'entraînement (16) se trouve au moins partiellement à l'extérieur de la partie de coiffe (3).

13. Appareil de détartrage dentaire selon la revendication 12, caractérisé en ce que l'outil de détartrage (32) se trouve à l'extérieur de la partie de coiffe (3) avec une longueur dans la plage d'environ 8 mm à environ 20 mm, en particulier une longueur d'environ 12 mm.

14. Appareil de détartrage dentaire selon l'une des revendications 9 à 13, caractérisé en ce que le moteur (9) logé de manière fixe dans la partie de poignée (2) est pourvu d'un arbre moteur (24) avec des pales (25) qui s'étendent en direction longitudinale, et en ce que l'arbre d'entraînement (16) est pourvu à son extrémité tournée vers le moteur (9) d'un logement en forme de pot (17) avec des barrettes longitudinales (26) à l'intérieur, les pales (25) de l'arbre moteur (24) s'engageant entre les barrettes longitudinales (26) du logement en forme de pot (17) avec chevauchement en direction longitudinale.

15. Appareil de détartrage dentaire selon l'une des revendications précédentes, caractérisé en ce que la partie de coiffe (3) est pourvue, du côté tourné vers la partie poignée (2) de moyens pour fixer la partie de coiffe (3) de façon détachable sur la partie de poignée (2).

16. Appareil de détartrage dentaire selon la revendication 15, caractérisé en ce que la partie de de poignée (2) et la partie de coiffe (3) présentent au moins un doigt en saillie (43, 44, 45) et un évidement associé, qui s'engagent l'un dans l'autre lorsque la partie de coiffe (3) est enfichée.

17. Appareil de détartrage dentaire selon la revendication 16, caractérisé en ce qu'une ouverture (40, 41, 42) qui traverse la partie de coiffe (3) est associée au doigt (43, 44, 45).

18. Appareil de détartrage dentaire selon l'une des revendications 15 à 17, caractérisé en ce que la partie de coiffe (3) est pourvue, de son côté tourné vers la partie de poignée (2), de moyens pour associer de façon univoque la partie de coiffe (3) sur la partie de poignée (2) en direction périphérique.

19. Appareil de détartrage dentaire selon l'une des revendications 15 à 18, caractérisé en ce que la partie de poignée (2) et la partie de coiffe (3) présentent au moins une barrette longitudinale (49, 50, 51) et une gorge longitudinale associée (46, 47, 48), qui s'engagent les unes dans les autres lorsque la partie de coiffe (3) est enfichée.

20. Appareil de détartrage dentaire selon l'une des revendications 16 à 19, caractérisé en ce que sur les deux côtés du doigt (43, 44, 45) ou de l'évidement (40, 41, 42) sont prévues respectivement une barrette longitudinale (49, 50, 51) ou une gorge longitudinale (46, 47, 48).

21. Appareil de détartrage dentaire selon l'une des revendications 16 à 20, caractérisé en ce que trois doigts (43, 44, 45) ou évidements (40, 41, 42) sont pourvus de barrettes longitudinales (49, 50, 51) ou de gorges longitudinales (46, 47, 48) associées, qui sont agencées sur la périphérie de la partie de poignée (2) ou sur la partie de coiffe (3) à des distances au moins partiellement inégales.

22. Appareil de détartrage dentaire selon l'une des revendications précédentes, caractérisé en ce que l'outil de détartrage (32) est réalisé sous forme d'un composant d'une seule pièce, en ce qu'il comprend une tige de détartrage (125) et est susceptible d'être mis en rotation par un moteur de l'appareil de détartrage dentaire (1), la tige de détartrage (125) étant souple et réalisée en élastomère de polyester ou un matériau équivalent quant à la solidité à la flexion, en particulier en Hytrel (marque déposée).

23. Appareil de détartrage dentaire selon la revendication 22, caractérisé en ce que la tige de détartrage (125) présente au moins une arête longitudinale (126).

24. Appareil de détartrage dentaire selon l'une ou l'autre des revendications 22 et 23, caractérisé en ce que la tige de détartrage (125) a une section transversale sensiblement carrée.

25. Appareil de détartrage dentaire selon la revendication 24, caractérisé en ce que la longueur (a) de côté de la section carrée s'élève de préférence à environ 0,3 mm.

26. Appareil de détartrage dentaire selon l'une des revendications 22 à 25, caractérisé en ce qu'une pluralité d'ergots (127) dépassent de la surface de la tige de détartrage (125).

27. Appareil de détartrage dentaire selon la revendication 26, caractérisé en ce que la hauteur (b) des ergots (127) s'élève de préférence à environ 0,2 mm.

28. Appareil de détartrage selon l'une ou l'autre des revendications 26 et 27, caractérisé en ce que la largeur (c) des ergots (27) s'élève de préférence à environ 0,2 mm.

29. Appareil de détartrage dentaire selon l'une des revendications 22 à 28, caractérisé en ce que la tige de détartrage (125) est pourvue d'un balourd au moyen d'une accumulation ciblée de masse.

30. Appareil de détartrage dentaire selon l'une des revendications 22 à 29, caractérisé en ce que la tige de détartrage (125) a une longueur de préférence égale à 12 mm.

31. Appareil de détartrage dentaire selon l'une des revendications 22 à 30, caractérisé en ce que l'outil de détartrage (32) est réalisé en Hytrel (marque déposée).

32. Appareil de détartrage dentaire selon l'une des revendications 22 à 31, caractérisé en ce que l'outil de détartrage (32) est susceptible d'être enfiché sur l'appareil de détartrage dentaire (1).

33. Appareil de détartrage dentaire selon l'une des revendications 22 à 32, caractérisé en ce que la tige de détartrage (125) présente du côté extrémité un arrondissement (128) sensiblement émoussé.

34. Appareil de détartrage dentaire selon l'une des revendications 22 à 33, caractérisé en ce que la tige de détartrage (125) est mince et allongée.

35. Outil de détartrage (32) comprenant une tige de détartrage (125) en combinaison avec une partie de coiffe (3) à enficher sur un appareil de détartrage dentaire (1), en particulier selon l'une des revendications 1 à 21, caractérisé en ce que l'outil de détartrage (32) est reçu par la partie de coiffe (3) et est agencé en translation et en rotation dans la partie de coiffe (3).

36. Outil de détartrage selon la revendication 35, caractérisé en ce que la partie de coiffe (3) est pourvue d'un tube de guidage (7) dans lequel est guidée extrémité libre de la tige de détartrage (125).

37. Outil de détartrage selon l'une ou l'autre des revendications 35 ou 36, caractérisé en ce que le tube de guidage (7) est pourvu à son extrémité libre d'un arrondissement (37) en particulier approximativement en forme de demi-sphère, de préférence avec un diamètre dans la plage d'environ 1 mm à environ 4 mm, en particulier avec une valeur d'environ 2,5 mm.

38. Outil de détartrage selon l'une des revendications 35 à 37, caractérisé en ce que le tube de guidage (7) comporte un coude (8), l'angle du coude ayant une valeur dans la plage depuis environ 30° jusqu'à environ 150°, en particulier une valeur d'environ 90°.

39. Outil de détartrage (32) comprenant une tige de détartrage (125), en combinaison avec une partie de coiffe (3) à enficher sur un appareil de détartrage dentaire (1) en particulier selon l'une des revendications 1 à 21, caractérisé en ce que l'outil de détartrage (32) est reçu par la partie de coiffe (3), et en ce que la partie de coiffe (3) est pourvue de moyens pour la fixation détachable de l'outil de détartrage (32) dans une position transport dans laquelle l'outil de détartrage (32) se trouve entièrement à l'intérieur de la partie de coiffe (3).

40. Outil de détartrage selon la revendication 39, caractérisé en ce que la partie de coiffe (3) comprend une partie en forme de fourreau (6) avec une barrette annulaire (38) en dépassement vers l'intérieur, et en ce que l'outil de détartrage (32) est pourvu d'un socle (34) en forme de disque, ledit socle (34) présentant une gorge annulaire (39) associée à la barrette annulaire (38), dans laquelle la barrette annulaire (38) est susceptible de s'enclencher pour la position de transport.

41. Outil de détartrage selon les revendications 39 et 40, caractérisé en ce que l'outil de détartrage (32) comprend des moyens pour son accouplement solidaire en rotation et détachable avec un arbre d'entraînement (16).

42. Outil de détartrage selon l'une des revendications 35 à 41, caractérisé en ce que la tige de détartrage est réalisée en élastomère de polyester ou un matériau équivalent, en particulier du Hytrel (marque déposée).

43. Outil de détartrage selon l'une des revendications 35 à 42, caractérisé en ce que la tige de détartrage (125) présente au moins une arête longitudinale (126).

44. Outil de détartrage selon la revendication 43, caractérisé en ce que la tige de détartrage (125) présente une section transversale sensiblement carrée.

45. Outil de détartrage selon la revendication 44, caractérisé en ce que la longueur (a) du côté de la section carrée s'élève de préférence à environ 0,3 mm.

46. Outil de détartrage selon la revendication 45, caractérisé en ce qu'une pluralité d'ergots (127) dépassent de la surface de la tige de détartrage (125).

47. Outil de détartrage selon la revendication 46, caractérisé en ce que la hauteur (b) des ergots (127) s'élève de préférence à environ 0,2 mm.

48. Outil de détartrage selon l'une ou l'autre des revendications 46 et 47, caractérisé en ce que la largeur (c) des ergots (27) s'élève de préférence à environ 0,2 mm.

49. Outil de détartrage selon l'une des revendications 35 à 48, caractérisé en ce que la tige de détartrage (125) est pourvue d'un balourd par accumulation ciblée de masse.

50. Outil de détartrage selon l'une des revendications 35 à 49, caractérisé en ce que la tige de détartrage (125) présente une longueur de préférence de 12 mm.

51. Outil de détartrage selon l'une des revendications 35 à 50, caractérisé en ce que l'outil de détartrage (32) est réalisé en Hytrel (marque déposée).

52. Outil de détartrage selon l'une des revendications 35 à 51, caractérisé en ce que l'outil de détartrage (32) est susceptible d'être enfiché sur l'appareil de détartrage dentaire (1).

53. Outil de détartrage selon l'une des revendications 35 à 52, caractérisé en ce que la tige de détartrage (125) comporte du côté extrémité un arrondissement (128) sensiblement émoussé.

54. Outil de détartrage selon l'une des revendications 35 à 53, caractérisé en ce que la tige de détartrage (125) est mince et allongée.
